# EUROPEAN PATENT SPECIFICATION

(11) **EP 3 844 450 B1**
(45) Date of publication and mention of the grant of the patent: **29.01.2025**
(21) Application number: 19762350.7
(22) Date of filing: 29.08.2019
(51) Int. Cl.: F28D 20/00, F28D 17/00, F28D 17/04, F24H 7/02

(54) **METHOD AND APPARATUS FOR HEAT STORAGE**
ERFAHREN UND VORRICHTUNG ZUR WÄRMESPEICHERUNG
PROCÉDÉ ET APPAREIL DE STOCKAGE DE CHALEUR

(30) Priority: 30.08.2018 GB 201814140
(43) Date of publication of application: 07.07.2021
(73) Proprietor: Heliac A/S, 2990 Nivå (DK)
(72) Inventor: PRANOV, Henrik, 3060 Espergaerde (DK)
(74) Representative: Beck Greener LLP
(86) International application number: PCT/EP2019/073147
(87) International publication number: WO 2020/043854

(56) References cited:
- FR-A1- 2 981 736
- GB-A- 2 485 836
- GB-A- 2 509 894
- KR-A- 20170 029 959

## Description

### FIELD OF THE INVENTION

The present invention relates to a thermal storage for storing energy for later use, a heat storage reservoir, and a method for storing heat.

### BACKGROUND OF THE INVENTION

Many energy generation technologies, especially renewable sources such as wind and solar power, deliver energy in a pattern not coincident with the local energy consumption. Therefore, storage of energy for later use is an important aspect of the energy infrastructure. Today, many such technologies do exist, such as chemical batteries and thermal storage solutions. However, most solutions are expensive compared to the amount of energy stored, or have a limited number of operational cycles (charge-discharge), substantially increasing the cost of stored energy compared to energy used directly. Therefore, a solution which is scalable to store large amounts of energy at a low cost with a high number of operational cycles would be advantageous.

FR2981736 describes a heat storage system for storing solar thermal energy, especially for heating buildings, to allow use in winter of the solar thermal energy collected in summer. The heat storage system comprises: a sealed enclosure with an inlet and a heat transfer fluid outlet; an energy storage medium, which is preferably spherical particles of a glass, ceramic, or vitrified asbestos, preferably of a diameter between 1 mm and 1 cm, in the sealed enclosure; and a vacuum pump in fluid communication with the enclosure. It is proposed that the heat losses of the sealed enclosure, once heat has been transferred to the energy storage medium, can be reduced by pumping out the heat transfer fluid from the sealed enclosure and maintaining the pressure in the sealed enclosure below atmospheric pressure for the duration of the storage period. This is said to reduce thermal losses by convective and conductive exchanges between the energy storage medium and the heat transfer fluid.

GB2485836 describes the use of a pebble bed to cool gas in the event that a hot gas needs to be diverted from a turbine, for example in the event of an emergency shut down of a thermal power plant. The pebble bed intervenes between the hot gas stream and the cooler conventionally provided for use in such situations and is said to reduce thermal stress on the cooler by absorbing some of the heat of the gas and thus reducing the temperature to which the cooler is initially exposed during hot gas diversion away from the turbine. The pebbles in the pebble bed are made of a solid super-refractory material such as silicon carbide, mullite or alumina, and may have a diameter in the range of 12 mm to 30 mm. The pebble bed may be cooled by passing a fluid coolant therethrough, such as water, liquid nitrogen, steam or nitrogen gas, and a two-stage cooling process is envisaged in which gas coolant, such as steam, is delivered to the bed, followed by a liquid coolant such as water. The pebble bed may be provided with a condensate drain to remove any condensate produced during the heating or cooling of the bed. The cooling of the bed may be carried out by recirculating the fluid coolant through the pebble bed and a heat exchanger for cooling the coolant after it has passed through the pebble bed.

GB2509894 describes a thermal energy storage system and a method of storing and discharging thermal energy, in which a heated heat transfer liquid is flowed through a bed of particulate material, preferably rock or mineral material, to transfer heat from the heat transfer liquid to the particulate material for storage, and in which, to discharge the stored heat from the particulate material, gas is flowed through the bed of particulate material.

CH703413 describes a heat storage system for use with an air source heat pump, in which the storage system is in the form of an insulated box filled with rock grains or gravel through which air is circulated to warm or to cool the rock grains or gravel as needed.

US2012/241122 relates to a heat storage system in which heat transfer fluids are phase change fluids and heat transfer to the storage medium is predominantly by phase change of the heat transfer fluid. The storage medium may also be a phase transfer material.

Storage of thermal energy can be done in several ways. The most commonly used way is to heat a large thermal mass, e.g. a large block of concrete, using a heat transfer fluid, such as air, thermal oil or pressurized water, which passes through embedded tubes in the concrete. When the stored energy is to be used, a cold fluid is passed through the embedded tubing, thereby being heated by the concrete. The heated fluid can then be used to drive a thermal Carnot process or other processes making use of the stored heat. Instead of using a solid storage, a liquid storage such as a large reservoir of thermal oil or a molten salt can also be used, where the heat extraction process would typically be performed by passing the fluid through a heat exchanger to heat a secondary fluid which would be used in the Carnot or other process. A third way to store thermal energy is through the use of phase change materials, e.g. materials that melt or boil at a certain temperature, where a relatively large amount of heat is used to facilitate the phase change. Once the phase change process is reversed, the heat is released again at the boiling or melting point of the phase change material.

### SUMMARY OF THE INVENTION

It has been recognized by the present inventors that it is important that the storage system chosen can be charged with thermal energy in an efficient manner that allows maximum heat transfer between the heat source and the heat storage system and minimum losses of heat, and that, similarly, the storage system can be discharged of its stored thermal energy in an efficient manner. In addition, it would be desirable when using a large solid thermal mass to avoid the need to provide complicated-to-manufacture embedded tubing or similar means for distribution of the heat, while also ensuring that the heat distribution within the storage system is even, avoiding the formation of hot zones that are in close contact with the heat source or cold zones that are not in sufficiently close contact with the heat source to be efficiently heated by it. Further, there is a preference for the use of naturally available materials, and/or low-cost materials, and/or locally available materials, and for re-use of materials where possible, especially where the storage system is to be incorporated into a renewable energy generation system such as a solar powered system, a wind-powered system, a wave-powered system or a heat pump system (eg a ground source heat pump or an air source heat pump).

It is an object of the invention to provide an improved method for storing thermal energy.

It is an object of the invention to provide an improved method for storing thermal energy and increasing internal heat transfer in a packed bed system.

It is a further object of the invention to reduce the cost of thermal energy storage.

It is a further object of the invention to provide a thermal energy solution using a larger fraction of natural materials with a low carbon footprint.

It is a further object of the invention to simplify the construction of the thermal energy storage and add flexibility in dimensioning the storage with respect to the power of the input and output system and the size of the heat reservoir, respectively.

It is a further object of the invention to enhance durability, simplify maintenance and reduce barriers towards replacement of the thermal energy storage.

It is a further object of the invention to provide an improved method of charging a heat storage reservoir with heat, and/or discharging heat from a heat storage reservoir.

It is a further object of the invention to permit the use of heat transfer fluids that are usually not stable to the required operating temperatures for a heat storage reservoir.

It is a further object of the invention to provide an efficient method of heat transfer. It is a further object of the invention to provide an alternative to the prior art. Described herein is a heat storage reservoir, a heat storage system and methods of charging and/or discharging heat from such a heat storage reservoir or heat storage system, each aiming to fulfil at least one of the desirable aspects mentioned above.

Accordingly, in a first aspect, the present invention provides a heat storage reservoir comprising:
at least one input inlet for introduction of gaseous heat transfer fluid, or for introduction of superheated liquid heat transfer fluid, into the heat storage reservoir, and at least one liquid recovery system for recovery of liquid heat transfer fluid from the heat storage reservoir; and/or
at least one gas outlet for recovery of gaseous heat transfer fluid from the heat storage reservoir, and at least one output inlet for introduction of liquid heat transfer fluid into the heat storage reservoir;
and further comprising a volume of solid granular material, to which volume heat is transferred by means of a phase change from gas to liquid of a heat transfer fluid on contact of the heat transfer fluid with the solid granular material, and/or from which volume heat is transferred by means of a phase change from liquid to gas of a heat transfer fluid on contact of the heat transfer fluid with the solid granular material,
which volume is in fluid connection with the at least one input inlet and the at least one liquid recovery system, and/or the at least one gas outlet and the at least one output inlet, and
a pressure reduction system in fluid connection with the volume of solid granular material, characterized in that the pressure reduction system is arranged to reduce the gas pressure contribution arising from non-condensable species only, wherein the pressure reduction system comprises a condenser that operates to condense gaseous heat transfer fluid and prevent its removal from the heat storage reservoir by the pressure reduction system.

Preferably, the condenser is maintained at a suitable temperature to condense gaseous heat transfer fluid by exposure to the ambient environment. Preferably, the condenser is arranged such that condensed heat transfer fluid is returned to the heat storage reservoir under gravity.

Preferably, the heat storage reservoir further comprises insulation surrounding the volume of solid granular material, in order to reduce heat losses from the heat storage reservoir. Suitably, the insulation may be selected from mineral wool, glass wool, rock wool, ceramic wool, natural wool, and mixtures thereof.

Preferably, the solid granular material has a non-porous surface, and more preferably is capable of containing a volume of heat transfer fluid within the pores of the granule of less than 1 % of the volume of the granule. Preferably, the solid granular material has a convex granule shape, and more preferably has a granule shape such that a volume of heat transfer fluid of less than 1 % of the volume of the granule is able to occupy concave areas on the surface of the granule. Preferably, the solid granular material has a granule diameter of from 10 mm to 500 mm, such as from 10 mm to 300 mm. Preferably, the solid granular material has a granule diameter of greater than 10 mm. Preferably, the maximum range of the diameters of the granules of the volume of solid granular material is ±50% of the chosen granule diameter. Preferably, the filling ratio of the solid granular material within the volume of solid granular material ranges from 0.5 to 0.9. Preferably, the average width of the voids between the granules is from 10 mm to 30 mm. Preferably, the surface roughness of the granules Rₐ is less than 25 nm. Preferably, the receding contact angle of the surface of the granular material with respect to the heat transfer fluid is at least 45°. Suitably, the solid granular material may be surface treated to achieve a desired receding contact angle. Suitably, the solid granular material is surface treated with perfluorodecyltrichlorosilane, a silicone, or a siloxane.

Preferably, the solid granular material is selected from rock granules, mineral granules and mixtures thereof. Preferably, the solid granular material is selected from granite, basalt, marble, diamond, quartz, flint, pebbles obtained from a beach, sea bed or river bed, or mixtures thereof. Suitably, the rock granules or mineral granules may be manufactured granules. Preferably, the rock granules or mineral granules are obtained from naturally occurring rock or mineral, and more preferably are naturally occurring rock or minerals that have been divided into suitably sized granules.

Alternatively, the solid granular material may be an encapsulated phase change material. Suitably, the phase change material may be selected from eutectic salts or organic materials with a melting point in a suitable range. Suitable eutectic salts include potassium nitrate and sodium nitrate. Suitable organic materials include wax. Suitable encapsulating materials include metal, polymer or concrete. Preferably, the granules of encapsulated phase change material are spherical.

Preferably, the liquid recovery system comprises a sloping lower surface beneath or forming the lower portion of the volume of solid granular material.

Preferably, the output inlet is selected from one or more spray nozzles and one or more rotating distributors. Preferably, the output inlet is placed in the upper portion of the heat storage reservoir, such as above the volume of solid granular material.

Preferably, the heat storage reservoir is designed to be pressurized to at most 1 bar overpressure. That is, the heat storage reservoir is preferably designed to withstand a maximum internal pressure of 1 bar gauge, or 2 bar absolute.

In a second aspect, the present invention provides a heat storage system with the features according to claim 6.

Preferably, the heat storage reservoir is a heat storage reservoir according to one or more of the preferred features of the first aspect of the invention.

Preferably, the input heat source comprises a system for generating a saturated vapour of heat transfer fluid. Alternatively, the input heat source comprises a system for generating a superheated liquid heat transfer fluid. Suitably the input heat source comprises a primary fluid circuit and a heat exchanger for transferring heat from the primary fluid to the heat transfer fluid. Preferably, the input heat source comprises a source of solar heat, more preferably a solar concentrator. Preferably, the source of solar heat is used to heat a primary fluid in a primary fluid circuit. Where the input heat source comprises a system for generating a saturated vapour of heat transfer fluid, preferably, the system further comprises an evaporator.

Preferably, the output heat sink comprises a turbine. Preferably, the output heat sink comprises a heat exchanger for transfer of heat from the heat transfer fluid.

Preferably, the heat transfer system does not comprise pumps arranged to move the gaseous or superheated heat transfer fluid from the input heat source to the heat storage reservoir, and/or to move the liquid heat transfer fluid from the heat storage reservoir to the input heat source, and/or to move the gaseous heat transfer fluid from the heat storage reservoir to the output heat sink, and/or to move the liquid heat transfer fluid from the output heat sink to the heat storage reservoir. Preferably, the movement of heat transfer fluid through the input system and/or the output system is driven, for gaseous or superheated heat transfer fluid, solely by the phase change in the heat transfer fluid on contact with the solid granular material, and/or, for liquid heat transfer fluid, solely by the operation of gravity.

Preferably, the heat storage system is designed to be pressurized to at most 1 bar overpressure. That is, the heat storage system is preferably designed to withstand a maximum internal pressure of 1 bar gauge, or 2 bar absolute.

The heat transfer fluid or fluids used in the input system and the output system may be the same or different, and are chosen depending on the heat source of the input system and the heat sink of the output system, which may transfer heat optimally at the same temperature ranges or different temperature ranges.

Where it is desired to use more than one heat transfer fluid, the heat storage system may suitably be provided with a first input system for a first heat transfer fluid, a second input system for a second heat transfer fluid, and so on for third, fourth, fifth and further heat transfer fluids and input systems. Similarly, the heat storage system may suitably be provided with a first output system for a first heat transfer fluid, a second output system for a second heat transfer fluid, and so on for third, fourth, fifth and further heat transfer fluids and output systems. Again, the combination of heat transfer fluids used in in the input and output systems may be the same or different, depending on the heat source in the input system and the heat sink in the output system, in particular, the temperature to which a heat transfer fluid can be heated by the heat source and the temperature required to be reached by the output heat sink. Alternatively, the use of more than one heat transfer fluid may be achieved by use of a single input system and/or output system, in which separate input inlets and liquid recovery systems, and/or output inlets and gas outlets, respectively, are provided, which are each in separate fluid connection with the input heat source and output heat sink, respectively. A further alternative is that the same inlets and outlets are used for each of a succession of heat transfer fluids, which may be preferable if the heat transfer fluids are easily separable, or are inexpensive, or if a first heat transfer fluid is able to be removed substantially completely from the heat storage reservoir before a subsequent heat transfer fluid is introduced. Where this last arrangement is used, the individual heat transfer fluids may be provided with separate fluid paths between the liquid recovery system, heat source and input inlet, for the input system, and/or between the gas outlet, heat sink and output inlet, for the output system, or they may use common fluid paths.

The heat storage system may suitably further comprise one or more reservoirs for storage of the heat transfer fluid or fluids to be used, each reservoir being in fluid contact with the input system and/or the output system in an appropriate manner to receive heat transfer fluid from the system when not in use and to supply heat transfer fluid to the system when in use.

The heat storage system may suitably further comprise a system for separation of heat transfer fluids from one another, where the fluids have become mixed during use. For example, the heat storage system may further comprise: phase separation apparatus, such as a separatory funnel or centrifuge, for the separation of immiscible heat transfer fluids on the basis of density; or distillation apparatus for the separation of heat transfer liquids based on boiling point difference.

The heat storage system may suitably further comprise a system for removal of all heat transfer fluids from the heat storage reservoir and/or the input system and/or the output system. This is useful in order to decommission the heat storage system for cleaning or maintenance, or at the end of its useful life.

In a third aspect, the present invention provides a method of charging heat to and/or discharging heat from a heat storage reservoir with the features according to claim 9.

Preferably, the gas pressure contribution arising from non-condensable species only is 200 mbar or less, more preferably 175 mbar or less, or 150 mbar or less, such as 125 mbar or less, or 100 mbar or less, such as 75 mbar or less, or 50 mbar or less, such as 25 mbar or less, or 10 mbar or less, such as 5 mbar or less.

Preferably, the heat storage reservoir is a heat storage reservoir according to one or more of the preferred features of the first aspect of the invention.

Preferably, the fraction of heat transfer to and from said heat storage reservoir that takes place through phase change of the heat transfer fluid is preferably at least 50%, more preferably 60%, more preferably 70%, even more preferably 80%, even more preferably 90% and most preferably more than 95%.

In a fourth asoect. the oresent invention orovides a method of charging heat to and/or discharging heat from a heat storage system with the features according to claim 10.

Preferably, the pressure reduction system comprises a condenser that operates to condense gaseous heat transfer fluid and thus prevent its removal from the heat storage reservoir by the pressure reduction system.

Preferably, the gas pressure contribution arising from non-condensable species only is 200 mbar or less, more preferably 175 mbar or less, or 150 mbar or less, such as 125 mbar or less, or 100 mbar or less, such as 75 mbar or less, or 50 mbar or less, such as 25 mbar or less, or 10 mbar or less, such as 5 mbar or less.

Preferably, in the third and fourth aspects of the invention, the degree of pressure reduction is varied to vary the boiling point of the heat transfer fluid, to maximize the efficiency of the heat transfer between the heat transfer fluid and the solid granular material. Suitably, the degree of pressure reduction when charging the heat storage reservoir reduces during charging from a maximum value (ie a minimum pressure) on commencing charging to a minimum value (ie a maximum pressure) on completing charging with any one heat transfer fluid. Thus, the actual boiling point of the heat transfer fluid will change from a minimum value on commencing charging to a maximum value on completing charging. Similarly, suitably the degree of pressure reduction when discharging the heat storage reservoir increases during discharging from a minimum value (ie a maximum pressure) on commencing discharging to a maximum value (ie a minimum pressure) on completing discharging with any one heat transfer fluid. Thus, the actual boiling point of the heat transfer fluid will change from a maximum value on commencing discharging to a minimum value on completing discharging. This permits the fraction of heat transfer taking place as a result of the phase change of the heat transfer fluid to be maximized.

Preferably, the fraction of heat transfer to and from said heat storage reservoir that takes place through phase change of the heat transfer fluid is preferably at least 50%, more preferably 60%, more preferably 70%, even more preferably 80%, even more preferably 90% and most preferably more than 95%.

Preferably, in the third and fourth aspects of the invention, the heat transfer fluid is stable to the operating temperature of the heat transfer reservoir as a result of the reduction of the gas pressure contribution arising from non-condensable species.

All of the features described may be used in combination in so far as they are not incompatible therewith.

### BRIEF DESCRIPTION OF THE DRAWINGS

Figure 1 shows an embodiment of the heat storage system and heat storage reservoir of the invention.
Figure 2 is a flow chart depicting the heat storage system of the invention and its use in the method of the invention.

### DESCRIPTION OF THE INVENTION

This invention makes use of a heat storage system comprising a heat storage reservoir containing a volume of solid granular material, and particularly concerns the apparatus for and the method of charging and/or discharging the thermal storage reservoir, by presenting an effective way to transfer energy to, and/or to extract energy from, such a storage reservoir, without the need of embedded tubing, by using a process which prevents hotter or colder zones from forming in the storage reservoir, and which allows a highly efficient transfer of heat between the solid granular material and the heat transfer fluid.

The heat storage system according to the invention comprises an input system, a heat storage reservoir, and an output system. Furthermore, the invention may include a system for recovering different fractions of the used heat transfer fluids, and a system for removing all heat transfer fluids from the heat storage reservoir, which is preferable for maintenance or end-of-life deconstruction.

The input system comprises a system for generating in the heat storage reservoir a saturated vapour of heat transfer liquid(s) at a pressure close to or below ambient pressure. A typical implementation would be to have a primary fluid circuit (the heat source) and the heat transfer fluid to be evaporated to pass through a heat exchanger transferring heat from the heat source to the heat transfer fluid, thereby evaporating the heat transfer fluid. The evaporated heat transfer fluid is then passed into the heat storage reservoir as vapour. Alternatively, the heat transfer fluid can be superheated by the input heat source, in order that it remains liquid until it is introduced into the heat storage reservoir 102, and at least partially evaporates on or shortly after its introduction into the heat storage reservoir. This latter arrangement can allow for a simpler apparatus than including an evaporation device in the input system.

The heat storage reservoir comprises a volume of a granular material, where the granules of said material are preferably non-porous. The granular nature of the material will ensure that voids will be formed between the granules in such a way that the voids will form an interconnected grid through which the heat transfer fluid from the input system can flow. Provided that the granules are not porous and that the granules have a temperature below the boiling point of the heat transfer fluid, the evaporated heat transfer fluid will condense on the surface of the granules, thereby releasing the heat of evaporation of the fluid, which is absorbed by the granules, thus storing the heat. After condensation, the now liquid (and thereby denser) heat transfer fluid will be collected in the bottom (by the means of gravity) of the reservoir and be removed by mechanical means, e.g. by a pump. The higher the fraction of the heat transfer fluid that is removed in the liquid phase, rather than the vapour phase, the higher thermodynamic efficiency the system will have.

When the granules by this heat absorption reaches a temperature close to the boiling point of said heat transfer fluid, this process will no longer be able to move energy from the evaporated heat transfer medium to the heat reservoir. However, by employing a multitude of heat transfer liquids with different boiling points used in series, heat can be transferred to the storage until the storage reaches the boiling temperature of the heat transfer fluid having the highest boiling point. The reason for not using a single fluid with a high boiling point in the input system is that a typical heat source (e.g. a concentrated solar power plant) will be more effective at transferring heat to the heat transfer fluid the colder the heat transfer fluid is. This temperature will be set by the boiling point of the used heat transfer liquid as the heat source liquid will not cool below the boiling point of the heat transfer fluid in the heat exchanger. The control and selection of which heat transfer fluid is to be introduced will typically be done through temperature monitoring of the heat reservoir. By using condensation of a vapor phase fluid to transfer the heat to the reservoir, three major advantages are obtained over using a tubed system. First of all, no tubes are required in the heat reservoir, thereby significantly reducing the cost of the reservoir. Secondly, the granularity of the storage can be tuned to give different input/output power of the system (by controlling the surface to volume ratio of the system). The last major advantage is that such a system is self-leveling in regard to the temperature distribution of the thermal storage. This effect is due to the volume change when the evaporated heat transfer fluid condenses. Given a colder volume of the heat reservoir, the rate of condensation will be higher in this volume, and hence the mass flow to this volume will increase, thereby increasing the heating rate of this particular colder volume until the temperature is the same as the rest of the volume. This feature is especially important given the interchange of different heat transfer fluids as function of the temperature of the storage. If a high ratio of the supplied evaporated heat transfer liquid is not condensed (or is re-evaporated by a higher evaporation point fluid), the heat transfer efficiency of the system will be lowered. Therefore, good volumetric control of the temperature is an important feature of the system, which here is realized by using a heat transfer process (evaporation/condensation) which also gives rise to a volume and density change.

Furthermore, it has been discovered that reducing the residual air pressure, ie the gas pressure contribution from non-condensable species, in the heat storage reservoir during heat transfer greatly increases the internal heat transfer rate. This is due to the increased rate of both evaporation and condensation of the heat transfer fluid, as well as increased rate of diffusion of evaporated liquid between colder and hotter zones in the storage.

Furthermore, a system to maintain low residual air pressure in the system has been developed. Most systems that are operated at less than atmospheric pressure will have small leaks causing air to enter the system, thus slowly increasing the residual air pressure, which will reduce the internal heat transfer over time. By using a standard vacuum pump connected directly to the system, both residual air and the heat transfer fluid (to some extent) will be evacuated, which is not a preferable situation. However, by inserting a long and narrow tube which is maintained at ambient temperature between the storage and the vacuum pump, with the vacuum pump being placed higher than the storage, the active fluid will condense in the tube and return to the storage due to gravity as liquid that can be recovered using the normal recovery system of the thermal storage, whereas the residual air will not condense at ambient temperature and hence be evacuated. In order to further minimize the evacuated active fluid, the tube or a section thereof can be actively cooled to a temperature where the vapor pressure of the active fluid is even lower.

A further feature of the system is that the heat reservoir granules should preferably not be porous, as condensation would then happen in the pores of the material, which to a large extent would prevent the condensed liquid from running down to the mechanical liquid collection system. If run down is prevented, the liquid will re-evaporate once the next heat transfer fluid is employed (at a higher temperature), with poorer thermodynamic efficiency as a result. Furthermore, it would also require higher volumes of (typically expensive) heat transfer fluids to be used in the system, resulting in a more expensive system. A way to further reduce the need for heat transfer fluids and a way to improve the charging/discharging characteristic of the system is to surface treat the granules such that the liquid heat transfer fluid will form drops on the surface and thereby run off faster.

The output system works in the opposite way to the input system; a shower of liquid heat transfer fluid is supplied at the top of the reservoir. Once the liquid heat transfer liquid reaches contact with the hot granules of the heat reservoir, the liquid heat transfer medium will evaporate, thus absorbing energy and increasing in volume. The volume increase will make the evaporated heat transfer liquid escape the heat reservoir (which is not designed to withstand high overpressure, such as pressures of greater than 1 bar gauge/2 bar absolute, but which is tightened towards gases) to an output heat exchanger system where the hot and evaporated heat transfer fluid will condense and thereby transfer the heat of evaporation to be used in another process, e.g. the water/steam in a steam turbine or the pressure fluid in an organic rankine cycle (ORC) system, or to water/steam in a steam generator. After condensation in the heat exchanger, the liquid fluid may be passed into the reservoir again in a cyclical process. Once the temperature of the heat reservoir reaches the boiling point of the fluid, a lower boiling point fluid must be employed. The reason for not starting to use the lowest boiling point liquid is that the temperature at which the heat energy is extracted (which equals the boiling point of the used fluid) at should normally be as high as possible, e.g. to ensure a higher efficiency of electricity generation in a Carnot process (e.g. steam turbine / ORC generator).

As the system may make use of multiple heat transfer fluids in both the input and output system, it will be advantageous to include a mechanism to separate and separately store the different heat transfer liquids, so they can be employed numerous times in both systems, in an optimal thermodynamic way.

A further feature of the system is that moving the heat transfer liquid from the input system to the reservoir, and the reservoir to the output system, respectively, does not require the use of mechanical pumps. The phase change from liquid to gas in the output system, and the expansion that causes, drives the heat transfer fluid through the gas outlet. The phase change from gas to liquid in the input system causes a volume reduction, which draws further gaseous heat transfer liquid into the reservoir. Furthermore by arranging the inlets and outlets of the reservoir accordingly, gravity can be used to collect the condensed liquids from the reservoir or the output system, respectively.

A typical realization of the heat storage reservoir is to use stone or rocks having a relatively narrow size range. Typical dimensions (depending on how fast energy needs to be extracted and how large the volume of the reservoir is) will be in the range 10-500 mm. A typical size range will be +/-50% in diameter in order to form the required network of voids around the granules, as having a very broad size distribution will typically result in densely packed structures. Furthermore, it will also be dependent on the local source of materials. Another realization could be to use metal containers with a phase change material within. This would add cost, but allow for the storage of more energy at the phase change temperature of said phase change material. This may be a preferable solution if the volume of the reservoir is constricted.

An advantage of the disclosed heat storage is the combination of the granular, non-porous material and the evaporation/condensation process for input and output of heat energy using a multitude of heat transfer liquids with different boiling points, which solves the challenge of controlling the heat distribution in a granular material by forced flow (without any volume change) and the problem of having limited thermodynamic efficiency by only using a single liquid. Furthermore, the use of a multitude of heat transfer fluids increases the possible temperature range of operation of the heat storage system without requiring the heat storage system to be designed to operate at a significant overpressure, as, once the boiling point of a given heat transfer fluid at ambient pressure is exceeded, a further heat transfer fluid having a higher boiling point at ambient pressure can be used to increase the maximum storage temperature that can be reached by the heat storage system. Thus, the cost and complexity of the system is decreased.

The invention furthermore preferably relates to a thermal storage where the said phase change actuates the required mass transport as a result of the volume change associated with the said phase change of the heat transfer fluid in the said heat storage reservoir, and/or in the input and/or output systems, respectively, thus avoiding the use of mechanical pumps to move the evaporated heat transfer liquid between the non-porous granular material and the input and/or output systems, respectively.

The invention furthermore relates to a thermal storage where the granules have a receding contact angle of at least 45 degrees, more preferably more than 50 degrees, more preferably more than 55 degrees, more preferably more than 60 degrees, more preferably more than 65 degrees, more preferably more than 70 degrees, even more preferably more than 75 degrees, even more preferably more than 80 degrees, even more preferably more than 85 degrees, and most preferably above 90 degrees, and preferably where the contact angle is a result of a surface treatment process of the granular material.

The invention furthermore relates to a thermal storage in which the said heat reservoir is preferably designed to be maximally pressurized at less than 1 bar overpressure, more preferably by less than 0.5 bar overpressure, even more preferably by less than 0.25 bar overpressure and more preferably by less than 0.1 bar overpressure and most preferably not being designed to be pressurized at above ambient pressure. Similarly, the method of the invention preferably is carried out at a maximum pressure in the heat transfer reservoir of 1 bar overpressure (ie 1 bar gauge, 2 bar absolute), more preferably by less than 0.5 bar overpressure, even more preferably by less than 0.25 bar overpressure and more preferably by less than 0.1 bar overpressure, and most preferably is carried out with no increase in pressure of the heat storage reservoir compared with ambient pressure.

The invention furthermore preferably relates to a thermal storage where the operating temperature ranges from ambient temperature to 500 °C. Suitably, the maximum temperature to which the volume of solid granular material can be heated in the invention is 250 °C, or 300 °C, or 350 °C, or 400 °C, or 450 °C, such as 475 °C, or 500 °C.

The invention furthermore relates to a thermal storage or a method of charging and/or discharging a thermal storage, in which the multitude of heat transfer fluids used have different boiling points and are used sequentially during charging and discharging of the said thermal storage.

The invention furthermore relates to a thermal storage or a method of charging and/or discharging a thermal storage, in which the heat transfer fluid used has a pressure dependent boiling point and the pressure is variable to set the boiling point of the said heat transfer fluid according to the temperature state of the said thermal storage.

The invention furthermore relates to a thermal storage without any gas-phase mechanical pumps for pumping heat transfer fluid between the said input system, the said thermal reservoir and the said output system.

By evaporation heat is meant the enthalpy of evaporation.

By active fluid is meant the heat transfer fluid that is being used to transfer the heat from the heat source to the storage by evaporation in the input system and condensation in the storage, or the fluid used to transfer the heat from the storage to the output system by evaporation in the storage and condensation in the output system.

By gas pressure contribution from non-condensable species is meant the pressure of inactive gases in the system, e.g. the pressure of atmospheric air, nitrogen or other gases that are not evaporating or condensing in the temperature window of operation of the thermal storage. This is also referred to as "residual air pressure".

By convex granule is meant a shape of a granule where no significant amount of liquid can assemble in concave regions on the surface of the granule, and hence will run off due to gravitational drag in the liquid. For the purpose of this application, a granule is defined as convex if liquid volume equaling less than 1% of the volume of the granule can be assembled in concave surface regions of the granule.

By granular is meant a material comprised of individual cohesive parts capable of forming a mechanically stable aggregate with voids (or air) in between the individual granules.

By diameter of a given object is meant the equivalent diameter of a spherical object of the same mass and density. Hence, the requirements for the size range of the granular material defined by the diameter does not imply the need for the granular material to consist of spherical objects.

By size distribution is meant the relative spread of the size of the object. The distribution may follow a normal distribution or other distributions, and the spread is defined to be two standard deviations, equal to have 95% of the objects within the spread.

By pressurized is meant a construct designed to be able to be mechanically stable at significant internal overpressure. In this context, significant is defined as more than 1 bar overpressure.

By phase change material is meant a material which changes between solid and liquid phase at a specific temperature.

By heat transfer fluid is meant a fluid capable of being liquid and gaseous with a phase change separating these two states with an associated enthalpy of evaporation.

By thermodynamic efficiency is meant the energy quality loss (or entropy gain) from the input to the output system. For example, where the temperature gradient between a heat transfer fluid and a solid material granule is very large, the temperature loss on heat transfer between the fluid and the granule is large, and the thermodynamic efficiency of the transfer is thus low. On the other hand, where the temperature gradient is small, but sufficient to allow the phase change of the heat transfer fluid on contact with the granule to a sufficient degree to give an acceptable transfer rate, the thermodynamic efficiency of the transfer is much higher and the temperature loss accompanying the transfer is much less.

By boiling point is meant the boiling point at atmospheric pressure.

By "X is in fluid connection with Y" is meant that a fluid flow path is provided between element X and element Y.

The method and apparatus according to the invention will now be described in more detail with regard to the accompanying figures. The figures show one way of implementing the present invention and are not to be construed as being limiting to other possible embodiments falling within the scope of the attached claim set.

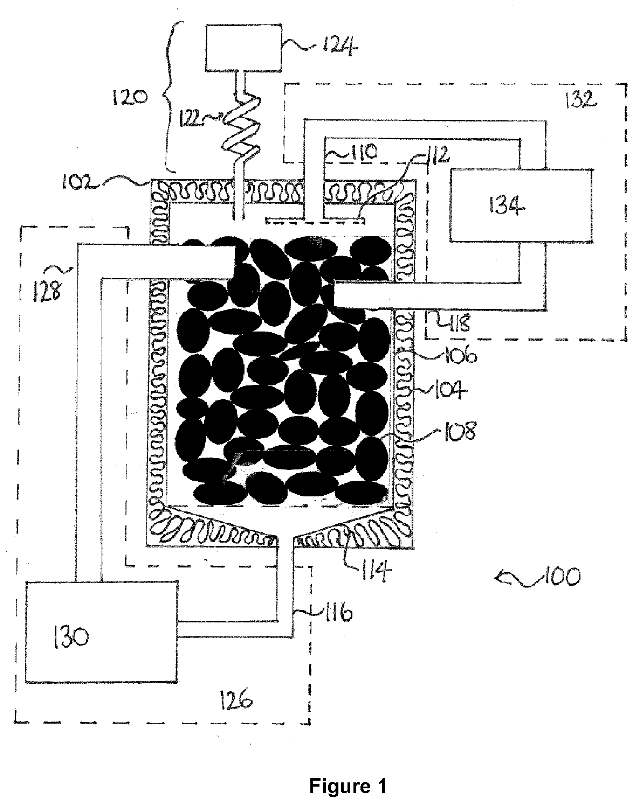

Figure 1 depicts an embodiment of the heat storage system 100 according to the invention, comprising a heat storage reservoir 102 according to the invention. The heat storage reservoir 102 is substantially gas tight when the various inlets and outlets provided are closed. The heat storage reservoir may be made of any material suitable to withstand the conditions of use, both in terms of temperature and pressure, and suitable materials include concrete or metal. For use in the context of the present invention, the heat storage reservoir need not be designed to withstand a large positive overpressure, as pressurising the reservoir to pressures significantly above atmospheric pressure, such as in excess of one bar gauge, is not envisaged.

The heat storage reservoir also comprises insulation 104 to prevent heat loss from the reservoir, with suitable insulation being such materials as mineral wool, glass wool or rock wool and other ceramic or stone wools, or other suitable materials as well known to the skilled person.

Within the heat storage reservoir 102 is provided a volume 106 of solid granular material 108, which functions to store heat by receiving heat from an input heat transfer fluid to cause a phase change in the heat transfer fluid from the gaseous state to the liquid state, and, when the stored heat is required, by transferring heat to an output heat transfer fluid to cause a phase change in the heat transfer fluid from the liquid state to the gaseous state.

In order that the solid granular material may carry out this function it is preferably a non-porous material, at least at its surface, and preferably throughout each granule, in order that heat transfer fluids passing over the surface of the solid granular material are not trapped within the pores of the material to any significant degree. Further, it is preferred that the solid granular material is of a generally convex shape, again to prevent heat transfer fluid collecting in concave areas, or recesses, of the surface of the material granules. For these reasons, it is preferred that the solid granular material is capable of containing a volume of heat transfer fluid of less than 1 % by volume of the granules within the pores of the material granules that are accessible to the heat transfer fluid. Similarly, the solid granular material is preferably of a shape which permits a volume of heat transfer fluid of less than 1 % by volume of the granules to occupy convex or recessed areas of the surface of the granules. For the purposes of these definitions, a pore is considered to have a diameter of less than 10 mm, and a concave area or recessed area on the surface of a granule is considered to have a diameter of 10 mm or more, as the former size is considered to allow liquid to be held to the granule surface by the capillary forces exerted by the pore, whereas this does not apply for larger concave areas or recessed areas.

It is also preferred that the solid granular material is non-porous in order to improve the capacity for heat storage for each granule.

It is thus envisaged that heat transfer will take place by contact between the heat transfer fluid and the surface of the solid granular material, and that the heat transfer fluid is able to pass freely over the surface of the solid material granules within the heat storage reservoir 102. Thus, the size and shape of the solid granular material must be chosen to permit free flow of the heat transfer fluid around and between the solid granules of material. It has been found by the present inventors that a diameter for the material granules of between 10 and 500 mm is suitable, such as greater than 10 mm to 500 mm, such as 10 to 300 mm, or greater than 10 mm to 300 mm. For example, an average diameter of 150 mm may be selected. Further, it is preferred that the diameters of the granules of solid material are relatively uniform, and a maximum range in the diameters of the granules would be ± 50% of the chosen diameter for the granules. For example, if an average granule diameter of 150 mm is selected, a 75 mm spread in the diameter might be permitted, and a 50 mm variation in the diameters of the granules preferred. In order to provide a suitable proportion of voids between the solid material granules in the heat storage reservoir for the passage of heat transfer fluid therethrough, suitably a filling ratio for the solid granular material within the heat storage reservoir within the overall volume of the solid granular material provided in the heat storage reservoir ranges from 0.5 to 0.9, with a preferred value being 0.75. The average width of a void between granules might suitably be in the range of 10 to 30 mm.

It is preferred that the surface of the granular material is a relatively smooth surface which promotes the rolling off of droplets of heat transfer fluid from the surface in order to maximise the circulation of the heat transfer fluid within the volume of solid granular material. Suitably, the surface roughness of the individual granules Rₐ (the arithmetical mean deviation of the surface profile) may be less than 25 nm. The receding contact angle of the surface of the granular material with a heat transfer fluid may suitably be at least 45°, such as at least 50°, for example at least 55°, such as at least 60°, for example at least 65°, such as at least 70°, for example at least 75°, such as at least 80°, for example at least 85°, such as at least 90°. While it is possible to measure a roll off angle (ie the angle at which a droplet of fluid will roll off a surface) for a given combination of surface, fluid and droplet size, the receding contact angle, which is related to the roll off angle, is better defined and more reliable to measure. The receding contact angle is the contact angle between a liquid and a solid which has already been wetted with the liquid and which is in the course of being de-wetted. The receding contact angle may suitably be determined by reduction in the volume of an already positioned sessile drop in drop shape analysis, in which the volume of the drop is reduced manually or with a motorised piston. At the same time, images are recorded and evaluated. Suitable instruments to conduct such a measurement include the DSA100 available from Kruss Scientific (www.kruss-scientific.com).

Many materials inherently have a high receding contact angle at their surface. However, where the surface of the chosen solid granular material does not naturally have a suitably high receding contact angle, surface treatment of the granules is possible in order to increase the contact angle to a desired value. Suitable surface treatments might include coating the solid material granules with, for example, FDTS (perfluorodecyltrichlorosilane), silicones, or siloxanes. Again, the use of a non-porous material for the solid granular material is preferred, to use less of the surface treatment material, in addition to the benefits explained above. However, where the chosen material is more porous than desired, it may be possible to some extent to improve the performance of that material by a surface treatment with coatings such as mentioned above, as these treatments may reduce the capillary forces that hold liquid within the pores and thus allow liquids to flow more freely over the surface of the granules than would be the case without the surface treatment.

The requirement for the surface of the solid material granules to be smooth, non-porous and convex is of particular importance where the heat transfer fluid or fluids to be used are expensive, such as thermal oils, as it is desired to minimise losses during circulation of the fluids due to the oil remaining on the surface of and/or within the pores of the granule. However, where less expensive heat transfer fluids may be used, a higher degree of porosity, concavity and/or roughness of the surface of the granules, and thus higher losses of the fluid during circulation, can be tolerated.

Suitably, the solid granular material may be selected from rock granules or mineral granules. The materials should be chosen to be suitable to undergo numerous cycles of heating and cooling to the desired maximum storage temperature without breaking into significantly smaller pieces or decomposing. It is expected that using temperatures of up to 500 °C will not cause such problems for most rock granules or mineral granules. Suitable natural rock or natural mineral materials for the solid granular material may be granite, basalt, marble, diamond, quartz, flint or other similar rocks or minerals, or mixtures thereof. Further, it is envisaged that it would be possible to make use of rock that has been crushed, formed into granules and then sintered in order to reduce its porosity compared with the natural state, if desired, or other manufactured or non-natural rock or mineral products, such as synthetic diamond or engineered granite. However, the use of natural materials is preferred, more preferably locally obtainable natural materials, especially in the context of providing thermal storage for a renewable energy generation system. Taking into account the size and shape considerations for the granular material set out above, a particularly preferable material may be pebbles obtained from the sea, beach or riverbed, as these have already been worn into a smooth and more evenly convex shape than is usually obtained by the quarrying of rock on land. However, of course, quarried rock may be suitably smoothed, polished, size graded and/or shaped in order to arrive at a suitable granule size and shape for use in the present invention. Many naturally occurring rocks or minerals have a high receding contact angle at their surface; however, where this is not the case, surface treatment of the rock or mineral granules can be carried out as described above to improve the receding contact angle. This may allow the use of local rock or mineral deposits that do not inherently have the required surface characteristics.

Alternatively, and particularly where space for the heat storage reservoir is restricted, an encapsulated phase change material may be used as the solid granular material to which heat is transferred for storage. The phase change material is solid when heat has been discharged from the heat storage reservoir, and becomes liquid when heat is transferred to it from a heat transfer fluid. In general, a phase change material permits a heat storage reservoir of around half the volume of the one containing rock or mineral granules for the same heat storage capacity, as the phase change allows a much larger heat capacity for the phase change material at the temperature at which the phase change takes place, compared with a material for which a phase change does not take place at that temperature. In addition, this property can allow a much higher proportion of the stored heat to be obtained at a high temperature, if the phase change occurs at a high temperature, compared with a solid granular material for which a phase change does not occur, as a large proportion of the stored heat is released on change of phase from liquid to solid, rather than simply as a result of reducing temperature. However, the cost is significantly higher. Suitable phase change materials may include eutectic salts such as potassium nitrate or sodium nitrate, or organic materials such as wax with a melting point within a suitable range for the heat transfer to be performed. It is envisaged that the phase change material may be encapsulated in a suitable material, such as metal, polymer or concrete, to form the solid material granules. The choice of the encapsulating material will depend on the intended use of the heat storage reservoir, in particular the rate at which the heat transfer must occur. For example, if seasonal heat storage is desired, the heat transfer can occur slowly, and the material used to encapsulate the phase change material need not be a highly conducting material, and so concrete might be an appropriate choice. Where the heat transfer must occur more quickly, for example over the timescale of minutes or hours, however, a more rapidly conducting material must be selected to encapsulate the phase change material, with polymer or metal being more appropriate as these can form a thin capsule and/or conduct heat more rapidly than concrete. The properties of the granules of encapsulated phase change material are preferably as given above for solid granular materials generally. As the granules of encapsulated phase change material are manufactured, there is complete control over the size, size distribution, shape and surface properties of the granules. Preferably, the granules of encapsulated phase change material are spherical.

The heat storage system 100 further comprises an input system 126 for the introduction of heat to the heat storage reservoir 102, ie charging of the heat storage reservoir 102. The input system 126 comprises input inlet 128 for introduction of gaseous heat transfer fluid into the heat storage reservoir 102, liquid recovery system 116 for collection of liquid heat transfer liquid from the heat storage reservoir 102, and input heat source 130 for evaporating the liquid heat transfer fluid. Liquid recovery system 116, input heat source 130 and input inlet 128 are in fluid connection with one another in order to recirculate heat transfer fluid through the input system 126.

Input inlet 128 may be of any suitable form to introduce gaseous heat transfer fluid into the heat storage reservoir 102 in order that the gaseous heat transfer fluid contacts the solid granular material 108; for example, while Figure 1 depicts the input inlet 128 placed towards the upper part of the volume 106 of solid granular material 108, and extending across part of the width of volume 106, these positions are not to be construed as limiting. Further, separate inlets may be provided where different heat transfer fluids are to be used.

Below the lower portion 114 of the volume 106 of solid granular material is provided a liquid recovery system 116 for collection of liquid draining down through the volume of solid granular material. As depicted in Figure 1, the lower portion 114 of the volume of solid granular material 106 may be provided in such a form as to encourage the draining down of liquid under gravity, for example a sloped surface at the lower portion of the volume 106. Suitably, liquid collected at the liquid recovery system 116 may be pumped away, for example using a mechanical centrifugal pump (not shown), and/or further draining of fluid from the surface of the solid granular material 108 may be encouraged by means such as application of vibrations or soundwaves to the granular material 108. However, as will be appreciated, other arrangements allowing collection of liquid at the lower portion of the volume 106 may be used. Further, separate liquid recovery systems may be provided where different heat transfer fluids are to be used.

Input heat source 130 may comprise any device or method to add heat to the heat transfer fluid, such as direct electrical heating, a heat exchanger with a hot fluid on the opposite side of the heat transfer fluid, illumination by concentrated sunlight, a source of solar heat, for example a solar concentrator that is used to heat a fluid, or any other means to heat the heat transfer fluid in the input system. The input heat source 130 may comprise, or further comprise, a heat exchanger for transfer of heat to the heat transfer fluid to cause its evaporation. Where different heat transfer fluids are to be used, it may be preferred to provide a separate heat exchanger for each fluid, or separate flow paths through a single exchanger for each fluid.

The heat storage system 100 further comprises an output system 132 for the extraction of heat from the heat storage reservoir 102, ie discharging of the heat storage reservoir 102. The output system 132 comprises output inlet 110 for introduction of liquid heat transfer fluid into the heat storage reservoir 102, gas outlet 118 through which evaporated heat transfer fluid exits the heat storage reservoir 102, and output heat sink 134 for condensing the evaporated heat transfer fluid. Gas outlet 118, output heat sink 134, and output inlet 110 are in fluid connection with one another in order to recirculate heat transfer fluid through the output system 132.

Output inlet 110 may be of any suitable form for the introduction of liquid heat transfer fluid to the volume 106 of solid granular material. Suitably, the output inlet 110 may be in the form of one or more distributors in the upper portion of the heat storage reservoir 102, such as one or more spray nozzles or one or more rotating distributors. Figure 1 depicts a single rotating distributor arm 112, but it will be understood by the skilled person that alternative distributors may be provided, and that a suitable number and type of such distributors may be provided in order to ensure even distribution of the heat transfer fluid across the top of the volume of solid granular material with which heat is to be exchanged with the heat transfer fluid. Further, separate inlets may be provided where different heat transfer fluids are to be used. Preferably, output inlet 110 is placed above the volume of solid granular material in order that the liquid heat transfer fluid can be distributed through the volume of solid granular material by operation of gravity alone.

Gas outlet 118 may be of any suitable form to allow gaseous heat transfer fluid to escape from the heat storage reservoir 102 and to pass to the output heat sink 134; for example, while Figure 1 depicts the gas outlet 118 placed towards the upper part of the volume 106 of solid granular material 108, and extending across part of the width of volume 106, these positions are not to be construed as limiting. Further, separate gas outlets may be provided where different heat transfer fluids are to be used.

Output heat sink 134 may suitably comprise any apparatus that requires a source of heat, such as a turbine. The output heat sink 134 may further comprise a heat exchanger for transfer of heat from the gaseous heat transfer fluid to cause its condensation. Where different heat transfer fluids are to be used, it may be preferred to provide a separate heat exchanger for each fluid, or separate flow paths through a single exchanger for each fluid.

While the figure depicts a single input system 126 and single output system 132, it will be understood that more than one of each such system may be provided, for example in order to allow the separate circulation of different heat transfer fluids to be used at different stages of the heat transfer process, during charging and/or discharging of heat from the heat storage system, as necessary.

The heat storage reservoir suitably further comprises a temperature monitor placed to monitor the temperature of the volume of solid granular material.

The heat storage reservoir 102 further comprises a residual pressure reduction system 120 in fluid connection with the heat storage reservoir 102 to maintain low residual air (or gas) pressure within the volume 106 of solid granular material, where residual air (or gas) pressure refers to the pressure resulting from air or gas that is not, and does not comprise, evaporated heat transfer fluid, or other gases that undergo a phase change within the temperature range of operation of the heat storage reservoir. The residual pressure reduction system may suitably comprise an outlet leading to a vacuum pump. Preferably, the pressure reduction system further comprises a condenser 122 maintained at a temperature sufficiently lower than the boiling point of the heat transfer fluid that contact between the condenser and gaseous heat transfer fluid causes the heat transfer fluid to be condensed, thus reducing the evacuation of the heat transfer fluid from the heat storage reservoir by the residual pressure reduction system. Suitably, the condenser 122 may take the form of a tube, which is comprised in the fluid connection between the vacuum pump or other pressure reduction means and the volume 106 of solid granular material, and which slopes downward from the vacuum pump or other pressure reduction means towards the volume 106 of solid granular material to assist in returning condensed heat transfer liquid to the heat storage reservoir 102. A suitable form for the condenser 122 is a spiral tube as shown in Figure 1. Suitably, the condenser 122 is maintained at a suitable temperature to condense evaporated heat transfer fluid simply by exposure to the ambient environment outside the heat storage reservoir 102; however, it will be appreciated that other forms of temperature control are possible, such as the inclusion of a flowing water jacket surrounding the flow path connecting the vacuum pump or other pressure reduction means and the volume 106 of solid granular material. Alternatively, the condenser 122 may take the form of a cold finger or cold trap placed in the fluid connection between the vacuum pump or other pressure reduction means and the volume 106 of solid granular material. A pressure monitor may be provided to monitor the gas pressure contribution of non-condensable species, for example placed between the pump and the condenser.

The heat storage system may suitably further comprise a system for removal of all heat transfer fluids from the heat storage reservoir and/or the input system and/or the output system. This is useful in order to decommission the heat storage system for cleaning or maintenance, or at the end of its useful life. Suitably, the removal of heat transfer fluids may comprise heating the heat transfer fluids present in the heat storage system to evaporate them, such that they pass through the gas outlet 118, are condensed by the output heat sink 134, and are then drained off through a suitable valve provided in output system 132, for example to a storage vessel. Alternatively, the removal of the heat transfer fluids can be achieved by heating the heat transfer fluids present in the heat storage system to evaporate them, and use of the pressure reduction system to pump the evaporated heat transfer fluids out of the heat storage reservoir. The condenser 122 would in that case need to be maintained at a suitable temperature to prevent condensation and return of the heat transfer fluid to the heat storage reservoir, or provided with a suitable outlet to allow draining of the condensed heat transfer fluid, for example to a storage vessel, without it returning to the heat storage reservoir. Further alternative means for removal of heat transfer fluids from the heat storage vessel that are apparent to the skilled reader may also be provided.

In use, a liquid heat transfer fluid in input system 126 is heated, directly or indirectly, by input heat source 130 such that it evaporates, and is introduced in its gaseous state through the input inlet 128 such that it contacts the solid granular material 108 in the volume 106 within heat storage reservoir 102. The granules of solid material 108 are at this stage at a temperature below the boiling point of the heat transfer fluid. Accordingly, on contact of the evaporated heat transfer fluid with the surface of the solid granular material 108, the heat transfer fluid transfers heat to the solid granular material 108 and condenses onto the surface of the granules. Due to the smooth concave shape of the granular material, its high contact angle with the heat transfer fluid, its low surface porosity, and the void space provided between the granules of the granular material, the condensed heat transfer fluid flows freely downwards in the heat storage reservoir to be collected in the lower part of the reservoir 114 and drained through the liquid recovery system 116. This drained condensed heat transfer fluid is recirculated via input heat source 130 to be heated and evaporated once again and reintroduced through the input inlet 128 into the heat storage reservoir to transfer further heat to the solid granular material 108.

When the solid granular material 108 reaches a temperature very close to the boiling point of the heat transfer fluid, this process will no longer be able to transfer energy from the evaporated heat transfer medium to the heat reservoir efficiently, as a sufficient degree of condensation (which is an equilibrium process) of the heat transfer fluid will not reliably take place on contact with the solid granular material 108. If it is desired to transfer further heat into the heat storage reservoir, a second heat transfer liquid having a higher boiling point may be used in place of the first heat transfer liquid. The use of two or more heat transfer liquids having progressively increasing boiling points allows the transfer of heat into the solid granular material until the temperature of the solid granular material reaches, or approaches, the boiling temperature of the heat transfer fluid having the highest boiling point.

In an alternative embodiment of the invention, the heat storage system is according to the description above in relation to Figure 1, except that the input system 126 comprises input inlet 128 for introduction of superheated, rather than gaseous, heat transfer fluid into the heat storage reservoir 102.

Input inlet 128 may be of any suitable form to introduce superheated heat transfer fluid into the heat storage reservoir 102 in order that gaseous heat transfer fluid contacts the solid granular material 108. For example, input inlet 128 may comprise a pressure reduction valve at any chosen position between the input heat source 130 and the heat storage reservoir 102, but preferably placed close to the heat storage reservoir 102. The pressure reduction valve allows the pressure upstream of the valve to be maintained at a level such that the superheated heat transfer fluid does not evaporate to any significant extent, but is primarily in the liquid state. However, downstream of the pressure reduction valve, the pressure is maintained at a level such that the heat transfer fluid can evaporate at least partially, and enters the heat storage vessel 102 in a gaseous state. Alternatively, a pressure reduction valve need not be provided: where the pressure in the heat storage vessel 102 is reduced by the residual pressure reduction system 120, the pressure in the heat storage reservoir 102 may be maintained sufficiently lower than the pressure in the input inlet 128 that the superheated heat transfer fluid remains liquid in the input inlet 128 but evaporates on entering the heat storage reservoir 102. Preferably, in this circumstance, the input inlet 128 enters the heat storage reservoir 102 at the upper end of the reservoir, and the input heat source 130 is positioned lower than the point at which the input inlet 128 enters the heat storage reservoir 102, in order that the superheated liquid does not evaporate in the input heat source but only at the highest point of the input system as this will be the point of lowest pressure.

In use, the liquid heat transfer fluid in input system 126 is heated, directly or indirectly, by input heat source 130 such that it becomes superheated to above its normal boiling point at atmospheric pressure, but does not evaporate, and is introduced through the input inlet 128 in a volatile liquid state and evaporates on, or subsequent to, entry to the volume 106. The gaseous heat transfer fluid then contacts the solid granular material 108 in the volume 106 within heat storage reservoir 102. The granules of solid material 108 are at this stage at a temperature below the boiling point of the heat transfer fluid. Accordingly, on contact of the evaporated heat transfer fluid with the surface of the solid granular material 108, the heat transfer fluid transfers heat to the solid granular material 108 and condenses onto the surface of the granules. Where the heat transfer fluid does not completely evaporate on entry to the volume 106, or immediately subsequent thereto, some heat transfer may also take place by contact between heated liquid heat transfer fluid and the solid granular material 108. While the temperature of the solid granular material 108 is lower than the boiling point of the heat transfer fluid at the pressure maintained in the volume 106, but the superheated liquid transfer fluid has a temperature higher than the boiling point of the heat transfer fluid at the pressure maintained in the volume 106, liquid heat transfer fluid introduced into the volume 106 will evaporate, and any liquid heat transfer fluid that does not evaporate will flow to the bottom of the chamber and heat the condensed heat transfer fluid collected at the bottom of the chamber causing, if sufficient heat transfer fluid at a temperature above its boiling point is admixed, partial evaporation thereof. The evaporated heat transfer fluid will then contact the solid granular material in gaseous form to transfer heat thereto by condensation onto the surface of the solid granular material. Due to the smooth concave shape of the granular material, its high contact angle with the heat transfer fluid, its low surface porosity, and the void space provided between the granules of the granular material, the condensed heat transfer fluid flows freely downwards in the heat storage reservoir to be collected in the lower part of the reservoir 114 and drained through the liquid recovery system 116. This drained condensed heat transfer fluid is recirculated via input heat source 130 to be superheated and evaporated once again and reintroduced through the input inlet 128 into the heat storage reservoir to transfer further heat to the solid granular material 108.

When the solid granular material 108 reaches a temperature very close to the boiling point of the heat transfer fluid, this process will no longer be able to transfer energy from the evaporated heat transfer medium to the heat reservoir efficiently, as a sufficient degree of condensation (which is an equilibrium process) of the heat transfer fluid will not reliably take place on contact with the solid granular material 108. If it is desired to transfer further heat into the heat storage reservoir, a second heat transfer liquid having a higher boiling point may be used in place of the first heat transfer liquid. The use of two or more heat transfer liquids having progressively increasing boiling points allows the transfer of heat into the solid granular material until the temperature of the solid granular material reaches, or approaches, the boiling temperature of the heat transfer fluid having the highest boiling point.

In either of the above-described embodiments, the choice of number and type of heat transfer fluids depends on the temperature of both the heat source and the intended use. The choice will influence the thermodynamic efficiency as the boiling points of each heat transfer liquid will define the possible input and output temperatures. By having few (immiscible or azeotropic) fluids, a relatively larger difference in boiling point will be realized, and by having more azeotropic fluids, the better thermodynamic performance the system will have, but at an increased cost and complexity level. Typical differences in boiling point for different liquids will be in the range of 10 °C-80 °C. Having smaller boiling point differences by using more azeotropic fluids will improve the thermodynamic performance to the maximum level, but would also require a more advanced system to control the mixture and collect and store the fluids.

It has been determined by the present inventors that it is more efficient to use a succession of heat transfer fluids having progressively increasing boiling points rather than a single high boiling point heat transfer fluid, because a typical input heat source 130 will transfer heat more effectively to the heat transfer liquid if the heat transfer liquid is colder, due to the higher temperature gradient between the source and the heat transfer liquid. Use of a high boiling point heat transfer fluid initially will result in returned heat transfer fluid exiting through liquid recovery system 116 being at a temperature only slightly below its boiling point. Accordingly, the temperature gradient between the input heat source 130 and the heat transfer liquid to be evaporated is less than it would be if a lower boiling point fluid had been used.

However, the inventors have realized that, in the present invention, it is advantageous to select a small number of heat transfer fluids for use, such as one fluid, two fluids, three fluids or four fluids having different boiling points, as the pressure reduction system used in the present invention can allow pressure adjustment during the charging and/or discharging of the heat storage reservoir which in turn can adjust the boiling temperature of a given heat transfer fluid to a desired value, thus giving the same effect as the use of a succession of heat transfer fluids with different boiling points. Thus, a given heat transfer fluid may be used at a range of pressures from the lowest pressure selected during the charging or discharging of the heat storage reservoir up to ambient pressure, and thus be used at a range of effective boiling points as dictated by the pressure in the volume of solid granular material or phase change of material.

It will be appreciated that a heat transfer fluid used in the present invention must be one that is capable of a phase change from gas to liquid (during charging) or liquid to gas (during discharging) at the temperature and pressure conditions prevailing in the volume of solid granular material or volume of phase change material at the time of its use. The heat transfer fluid may be one that is solid at normal ambient temperature and pressure, so long as it is in the correct state to undergo the required phase change under the conditions of use. The heat transfer fluid should be one that is stable to repeated heating and cooling over the temperature range of operation of the heat storage system, and which is not flammable at any of the temperatures of operation of the heat storage system. Preferably, a heat transfer fluid for use in the present invention has a low melting point and a high normal boiling point. The first heat transfer fluid used for charging a heat storage reservoir is preferably liquid at ambient or slightly above ambient temperature. Preferably, a heat transfer fluid for use in the present invention reaches 1 bar vapor pressure at as high a temperature as possible. Suitable heat transfer fluids are oils (biological or mineral), silicones or other substances where the molecular weight can be tailored to get the feasible properties, or, for higher temperature use, sulphur.

In many cases, the upper temperature limit for operation of a heat transfer fluid is determined by the breakdown temperature of the fluid, or of specific molecular bonds of the fluid, in particular for organic components or silicones that break down in the range of 350-400 °C in the presence of oxygen. It is anticipated by the present inventors that such heat transfer fluids may be used at temperatures exceeding this range in the present invention due to the low residual air pressure used, and thus the very low oxygen content of the atmosphere in the heat storage reservoir.

From an economic and environmental point of view, the heat transfer fluid should preferably be cheap, non-toxic and non-corrosive.

It will be appreciated that heat transfer between the heat transfer fluid and the volume of solid granular material or volume of phase change material will be due partially to the heat of the phase change taking place when the heat transfer fluid condenses (on charging) or evaporates (during discharging) on contact with the solid granular material or the phase change material, and partially due to the temperature change of the heat transfer fluid that brings the heat transfer fluid to the temperature at which its phase change takes place. It is preferred that the fraction of heat transfer to and from the heat storage reservoir that takes place through phase change of the said heat transfer fluid is at least 50%, more preferably 60%, more preferably 70%, even more preferably 80%, even more preferably 90% and most preferably more than 95%. The skilled reader will appreciate that the proportion of the heat transferred due to the phase change is able to be calculated or modelled by known means. The higher the proportion of the heat transfer that is due to the phase change, the less the process is dependent on temperature gradient between the heat transfer fluid and the solid granular material or the phase change material; thus, the heat transfer can take place under almost isothermal conditions, allowing a significant degree of heat transfer to take place without the need for provision of a large temperature gradient. The size of the temperature gradient needed will depend on such factors as the identity of the heat transfer fluid, its surface tension, the pressure in the volume of solid granular material, the volume of the heat transfer material, and the purpose of the storage (for example, seasonal heat storage uses a large volume of solid granular material, and is expected to be charged and discharged slowly, such as over a period of weeks or months, and so a small temperature gradient is feasible). Suitably, there may be a maximum temperature difference between the heat transfer fluid and the volume of solid granular material or volume of phase change material at the time of contact of 50 °C, such as 45 °C, or 40 °C, such as 35 °C, or 30 °C, such as 20 °C, or 15 °C. In order for the phase change in the heat transfer fluid to take place on contact with the solid granular material or phase change material, there may be a minimum temperature difference between the heat transfer fluid and the volume of solid granular material or volume of phase change material at the time of contact of 2 °C, such as 5 °C, or 10 °C, such as 15 °C, or 20 °C, such as 25 °C or 30 °C.

It has further been found by the present inventors that there are significant advantages to using condensation of a vapour phase stream to transfer heat to the solid granular material, compared with using a system in which tubes are provided within a solid material such as a concrete block. First, no tubes are required in the heat reservoir thereby reducing the cost and complexity of manufacturing the reservoir. Second, the size of the solid granular material 108 used in the heat storage reservoir 102 can be adjusted in order to adjust the input/output power of the system by means of controlling the surface to volume ratio of the solid granular material 108. Third, the heat storage system 100 of the present invention inherently permits equalisation of the temperature distribution within the heat storage reservoir due to the volume change occurring on condensing the evaporated heat transfer fluid on contact with the solid granular material. Any colder area of the volume of solid granular material will cause a higher rate of condensation of the evaporated heat transfer fluid, thus causing mass flow to the colder area to increase and increasing the heating rate of this colder area until the temperature is the same as the remainder of the volume. That this self-equalisation of the temperature can be attained is particularly important when one wishes to use a succession of heat transfer fluids having increasing boiling point to charge the heat storage reservoir 102 with heat, as, if a high ratio of the supplied evaporated heat transfer liquid is not condensed or is re-evaporated by the introduction of a heat transfer fluid having a higher boiling point, the heat transfer efficiency of the system will be lowered. Fourth, the condensation of the heat transfer fluid on contact with the solid granular material 108 allows the transfer of significant heat from the heat transfer fluid to the solid granular material 108 almost independently of the temperature difference between the fluid and the granular material 108. As long as the solid granular material 108 is sufficiently cooler than the boiling point of the heat transfer fluid to cause its condensation, the heat transferred will equal, where the temperature difference between the fluid and the granular material is at the minimum required for condensation of the heat transfer fluid, or exceed, where the temperature difference between the fluid and the granular material is greater than the minimum required for condensation of the heat transfer fluid, the enthalpy of the gas-liquid phase change of the heat transfer fluid.

It has further been realised by the present inventors that reducing the residual air pressure within the heat storage reservoir 102 significantly increases the internal heat transfer rate. Without wishing to be bound by theory, the present inventors believe that this is due to the increased rate of evaporation (during discharge) and/or condensation (during charging) of the heat transfer fluid, as well as an increased rate of diffusion of evaporated heat transfer liquid between colder zones and hotter zones within the heat storage reservoir.

It has been described in FR2981736 that evacuation of a heat storage chamber following its charging with heat is advantageous in terms of reducing the heat loss from the heat storage chamber during storage period. However, the discovery of the present inventors relates specifically to residual pressure reduction in the heat storage reservoir during charging and/or discharging of heat from the reservoir, and not during the storage period. While it is an option within the present invention to reduce the residual pressure in the heat storage reservoir during charging and to maintain that lower pressure during the storage period in order to minimise the work needed to reduce the residual pressure during discharge of heat from the storage reservoir, the purpose of the residual pressure reduction of the heat storage reservoir is to improve the internal heat transfer rate between the heat transfer fluid and the solid granular material in the heat storage reservoir, and to tailor the boiling point of the heat transfer fluid to maximise the efficiency of the heat transfer. The use of residual pressure reduction during charging and/or discharging of the heat storage system is not suggested in FR2981736, and indeed would not result in any improvement in that system, which is designed to use air as the heat transfer fluid, and thus does not make use of the phase change of the heat transfer fluid as is required in the present invention. Further, it is only the residual air pressure that is to be reduced during charging and discharging of the heat storage reservoir. The overall pressure of the system will comprise contributions both from residual air (or other non-condensing gas) pressure and the vapour pressure of the heat transfer fluid. Removal only of non-condensing gases from the heat storage reservoir allows the improvement of the heat transfer between the heat transfer fluid and the solid granular material.

It has been found that reduction of the residual air pressure to 200 mbar or less allows the benefits of the invention in terms of heat transfer to be achieved, with lower residual air pressure being preferred. For example a maximum residual air pressure of 175 mbar, or 150 mbar, such as 125 mbar, or 100 mbar, such as 75 mbar, or 50 mbar, such as 25 mbar, or 10 mbar, such as 5 mbar, may be used. Depending on the type of residual pressure reduction system used, a minimum residual air pressure of 25 mbar, 20 mbar, 15 mbar, 10 mbar, 5 mbar, 2 mbar, 1 mbar or less than 1 mbar may be achievable.

Accordingly, before and/or during the introduction of evaporated or superheated heat transfer fluid through the input inlet 128, the residual air pressure of the heat storage reservoir is reduced by the residual pressure reduction system 120, suitably by operation of a vacuum pump attached to an outlet in the heat storage reservoir. The residual pressure reduction system is preferably operated during the entire cycle of introducing heat to the heat storage reservoir in order to prevent any small leaks in the heat storage reservoir causing air or gases to enter the system and thus increasing the residual air pressure and reducing the internal heat transfer rate over time. However, it is contemplated as an alternative that the residual pressure is reduced by operation of the residual pressure reduction system prior to introduction of evaporated or superheated heat transfer fluid to the solid granular material, and that the residual pressure reduction system ceases to operate before evaporated or superheated heat transfer fluid is introduced into the heat storage reservoir.

It has been noted by the present inventors that, where the pressure reduction system is to be operated during introduction of the evaporated or superheated heat transfer fluid to the heat storage reservoir, simple use of a vacuum pump or similar device attached to an outlet to the heat storage reservoir would result in the removal both of the residual air within the heat storage reservoir and the heat transfer fluid, in particular gaseous heat transfer fluid, which is not a preferable situation when seeking to increase the internal heat transfer rate and/or to recirculate the heat transfer fluids for repeated use. Accordingly, the present inventors have sought to overcome this difficulty by use of condenser 122 maintained at a temperature cooler than the boiling point of the heat transfer liquid, but above a temperature at which constituents of air, especially oxygen, can be condensed, and suitably at ambient temperature, between the solid granular material and the vacuum pump in order to condense any evaporated heat transfer fluid that comes in contact with condenser 122 and return it to the heat storage reservoir and prevent its removal by the vacuum pump. Suitably, condenser 122 may take the form of a long narrow tube maintained at a temperature lower than the boiling temperature of the heat transfer liquid and placed between the storage and the vacuum pump, with the vacuum pump being placed higher than the storage in order that any evaporated heat transfer fluid condensing on the cooled tube will flow down the tube and thus be returned into the heat storage reservoir. Suitably, the condenser is maintained at ambient temperature by placing condenser 122 outside the heat storage reservoir 102. Residual air does not condense at the temperature of the device 122 and hence will be evacuated through outlet 120. A further option might be to incorporate a cold trap or cold finger as known in the art, in which active cooling is applied to a section of tube to prevent the evacuation of heat transfer fluid.

Once heat transfer to the heat storage reservoir is complete, the outlets and inlet(s) may be closed in any suitable manner to seal the heat storage reservoir for the period of time for which heat storage is required. During this time, the residual air pressure may be maintained at its reduced pressure, or may be allowed to return to an ambient pressure. The former is preferred to reduce the energy expenditure in residual pressure reduction.

When it is desired to discharge heat from the heat storage reservoir 102, liquid heat transfer fluid is supplied through output inlet 110 to the top of the heat storage reservoir 102 such that it contacts the hot solid granular material 108. Once the liquid heat transfer fluid contacts the hot granules 108 of the reservoir 102, the liquid heat transfer fluid will evaporate, absorbing energy from the hot solid granular material 108 and causing a significant increase in volume. This volume increase will cause the evaporated heat transfer fluid to escape the heat storage reservoir through gas outlet 118 from where it may pass to output heat sink 134. For example, the evaporated heat transfer fluid may be passed to a heat exchanger system to transfer its heat of evaporation to another process such as the water or steam in a steam turbine or steam generator or the pressure fluid in an organic Rankine cycle system. Once the heat has been extracted from the evaporated heat transfer liquid and it has returned to the liquid state, the liquid heat transfer fluid may be recirculated to the heat storage reservoir 102 again through output inlet 110 to transfer further heat from the heated solid granular material 108. Once the temperature of the solid granular material 108 in the heat storage reservoir reaches the boiling point of the heat transfer fluid, in order to extract further heat a lower boiling point heat transfer fluid must then be employed, in the same way and for the same reasons as a succession of increasing boiling point heat transfer fluids was used during the charging of the heat storage reservoir.

Again, the reduction of residual air pressure during the discharging of heat from the heat storage reservoir 102 is found to improve the heat transfer rate, as explained above for charging of the heat storage reservoir. Similarly to the situation for charging the heat storage reservoir, the residual pressure reduction system is preferably operated during the entire cycle of introducing liquid heat transfer fluid to the heat storage reservoir in order to prevent any small leaks in the heat storage reservoir causing air or gases to enter the system and thus increasing the residual air pressure and reducing the internal heat transfer rate over time. However, it is contemplated as an alternative that the residual pressure is reduced by operation of the residual pressure reduction system prior to introduction of liquid heat transfer fluid to the solid granular material, and that the residual pressure reduction system ceases to operate before liquid heat transfer fluid is introduced into the heat storage reservoir. In the event that the reduced residual air pressure is maintained in the heat storage reservoir during the storage period, it is possible that the residual air pressure will be sufficiently low for the benefits of the invention in terms of heat transfer to be obtained without further operation of the residual pressure reduction system immediately prior to discharging heat; however, this will depend on the degree of air-tightness of the heat storage reservoir and the duration of the storage period. It is likely that an additional residual pressure reduction step would be required immediately prior to, and/or during, discharge of heat from the heat storage reservoir.

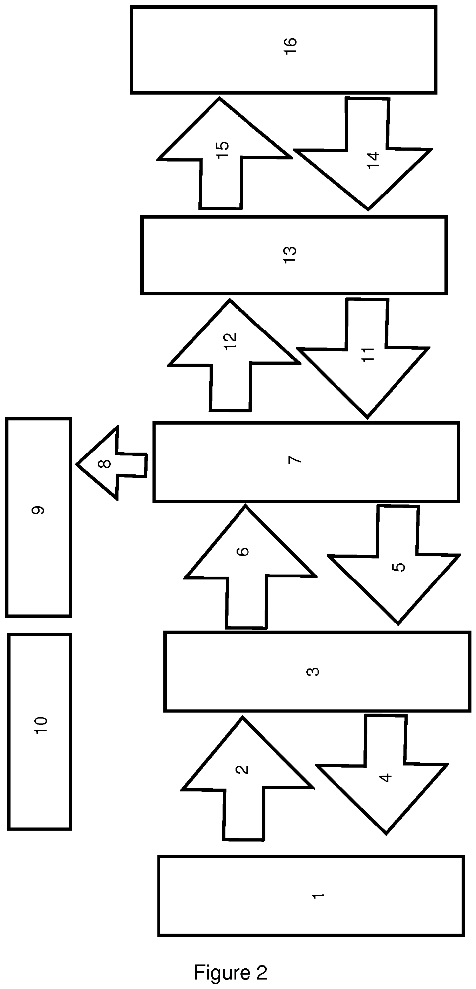

Figure 2 shows a flow chart of one embodiment of the heat transfer system of the invention. A heat source (1) provides a flow of hot fluid (2), which enters a heat exchanger (3) where it delivers part of its thermal energy, returning to the heat source as a cold return flow (4). The thermal energy is delivered to a flow of liquid heat transfer fluid (5), which upon receipt of the thermal energy evaporates to form a gaseous heat transfer fluid (6), or is superheated to form a superheated liquid heat transfer fluid (6). In the former case, the gaseous heat transfer fluid is led into the heat storage reservoir (7), and in the latter case, the superheated liquid heat transfer fluid is led into the heat storage reservoir (7) where it evaporates to form a gaseous heat transfer fluid. The gaseous heat transfer fluid then contacts the solid granular material where it condenses and thereby delivers thermal energy to the reservoir. After condensation, the now liquid heat transfer fluid is assembled, preferably by means of gravity in the bottom of the reservoir (7), and moved through the heat exchanger (3) again. Any non-condensed heat transfer fluid will be collected in a condenser (9), and the condensate will be stored in a storage (10).

When the energy in the heat reservoir (7) is to be used, a liquid heat transfer fluid (11) is dispensed into the heat reservoir, where it evaporates forming a gaseous heat transfer fluid (12), which is transferred to a heat exchanger (13), where it condenses, thus releasing thermal energy. The released energy can be used to evaporate a condensed working fluid (14) to form an evaporated working fluid (15) which can drive a turbine (16).

### EXAM PLES

### Example 1

A concentrated solar power plant delivering thermal oil at 350 °C is used as a heat source. The thermal oil is passed through a counter flow heat exchanger heating and evaporating a heat transfer fluid with normal boiling point 300 °C. The internal pressure in the reservoir and connected input/output systems are maintained below 0.01 bar through the use of a vacuum pump with a connection tube that is maintained at ambient temperature. The vapor pressure of the thermal oil at ambient temperature is typically of the order of 10⁻⁵ bar, resulting in very low evacuation of heat transfer liquid from the system, while maintaining a low residual air pressure. When the temperature of the heat reservoir is low, the total pressure in the system is low, equal to the vapor pressure of the heat transfer liquid plus the residual air pressure. At this pressure, the heat transfer liquid will evaporate at decreased temperature in the input system, thus able to maintain a relatively low return temperature to the solar field. As the storage temperature increases, the return temperature will also gradually increase. When the temperature increases towards the normal boiling point of the heat transfer liquid, the liquid may eventually be exchanged with a liquid with a higher normal boiling point in order to be able to increase the temperature of the storage further.

The heat reservoir consists of stones contained in an air tight metal container having dimensions of 12 m (length) x 2.35 m (width) x 2.6 m (height) and being insulated using ceramic stone wool on the outside. The stones have an average diameter of 150 mm and a size distribution (spread) of 50 mm. The shape of the stones are rounded, thus forming an interconnected network of air in between with an average width of 10-30 mm, measured as the largest distance from a point in the void to the nearest stone, allowing for relatively unhindered flow of heat transfer fluid. The bottom of the container is made slightly sloped, so a small area is defining the lowest point of the container, where a mechanical extraction mechanism is placed in the form of a pump. At the top of the container, spray nozzles are placed with a distance of 1 m in a 11 x 2 layout, each capable of delivering a liquid flow of 0.3 kg/s. With an average heat of evaporation of 300 kJ/kg for the heat transfer fluids, this corresponds to a maximum extraction rate of 2 MW. The filling ratio of the stones in the container is 75% giving a total specific heat capacity of 44.5 kWh/K. (specific heat of the used stone 0.84 kJ/(kg*K), density of the stone is 2600 kg/m³). For a fully charged container (300 °C) this corresponds to a usable energy content of approximately 10 MWh (when discharging to a stone temperature of 50 °C). The output system collect the hot evaporated heat transfer fluids through piping to the container. The evaporated heat transfer fluid is passed through a heat exchanger, where the heat is transferred to the working gas in an ORC generator, thus producing electricity. The condensed heat transfer fluid is then re-injected into the container. The fluid being used for the energy extraction can be the same as the fluid for the charging of the storage. When the temperature in the storage decreases during discharge, the heat transfer rate will gradually fall, and the temperature that can be achieved in the output system will also decrease. If the heat transfer rate falls below an operative threshold, a second heat transfer liquid with a lower normal boiling point can be injected, thus increasing the heat transfer rate, but not the maximum output temperature (which is limited by the storage temperature no matter the liquid used).

### Example 2

A concentrated solar power plant delivering thermal oil at 350 °C is used as a heat source. The thermal oil is passed through a counter flow heat exchanger heating and evaporating linseed oil with normal boiling point 287 °C. The internal pressure in the reservoir and connected input/output systems is reduced to around 0.01 bar prior to charging the reservoir with heat through the use of a vacuum pump with a connection tube that is maintained at ambient temperature. The vapor pressure of the linseed oil at ambient temperature is typically of the order of 10⁻⁵ bar, resulting in very low evacuation of heat transfer liquid from the system, while maintaining a low residual air pressure. When the temperature of the heat reservoir is low, the total pressure in the system is low, equal to the vapor pressure of the heat transfer liquid plus the residual air pressure. At this pressure, the heat transfer liquid will evaporate at decreased temperature in the input system, thus able to maintain a relatively low return temperature to the solar field. As the storage temperature increases, the return temperature will also gradually increase, and the pressure in the reservoir will increase to approach ambient pressure. When the temperature increases to 270 °C, the charging of the reservoir with heat is paused, and the remaining linseed oil in the reservoir is removed (first by gravity and time, and later by having a colder volume where remaining oil can be condensed). As a result of removing the remaining linseed oil from the system, its vapour pressure contribution to the overall pressure is also removed, and the system pressure is once again very low as a result of the reduction of the residual air pressure, such as a pressure of 0.01 bar. After this, sulphur (melting point 115 °C, boiling point 444 °C) is used as a second heat transfer fluid is used to allow the heat storage reservoir to be heated to a temperature of 420 °C. As when using linseed oil, as the temperature of the heat storage reservoir increases, the vapour pressure contribution to the overall pressure in the reservoir increases, and so the boiling point of the sulphur will increase from 270 °C at around 0.04 bar towards its normal boiling point of 444 °C at 1 bar pressure. Once heat transfer to the heat storage reservoir is complete, the remaining sulphur in the heat storage reservoir is then removed by the operation of gravity and time, with assistance if necessary from vibration of the solid granules to encourage draining of the liquid sulphur to the lower part of the reservoir, followed by condensation in a colder place than the storage.

When it is desired to discharge heat from the reservoir, the residual air pressure in the system is reduced, liquid sulphur is injected into the heat storage reservoir through the output inlet, and heat is transferred to it to evaporate it. The evaporated sulphur passes through the gas outlet and transfers its heat to the output heat sink, resulting in its condensation. Once the temperature of the heat storage reservoir is lowered to around 150 °C to 200 °C, the sulphur is removed from the heat storage system, and replaced by linseed oil to continue to discharge heat from the heat storage reservoir to lower temperatures.

### Example 3

A concentrated solar power plant delivering thermal oil at 350 °C is used as a heat source. The thermal oil is passed through a counter flow heat exchanger heating a heat transfer fluid with normal boiling point 300 °C which is maintained at 5 bar pressure in the said heat exchanger. The heat transfer fluid is heated to 345 °C at 5 bar in the heat exchanger, whereafter it is injected through a pressure reduction valve into the reservoir. The internal pressure in the reservoir and connected input/output systems are maintained below 0.01 bar through the use of a vacuum pump with a connection tube that is maintained at ambient temperature. Upon injection of the superheated heat transfer fluid, it partly evaporates at the reservoir inlet, and subsequently condenses on the coldest part of the reservoir. To prevent ambient air from building up in the reservoir (e.g. entering through small cracks in the encapsulation or leaky joints), a vacuum pump will continuously pump on the chamber. The vacuum pump will be connected to a long tube being maintained at ambient temperature. The vapor pressure of the thermal oil at ambient temperature is typically of the order of 10⁻⁵ bar, resulting in very low evacuation of heat transfer liquid from the system (as it condenses in said long tube), while maintaining a low residual air pressure (as the air does not condense in the said long tube at ambient temperature). When the temperature of the heat reservoir is low, the total pressure in the system is low, equal to the vapor pressure of the heat transfer liquid plus the residual air pressure. At this pressure, the heat transfer liquid will evaporate at decreased temperature in the input system, thus able to maintain a relatively low return temperature to the solar field. As the storage temperature increases, the return temperature will also gradually increase. When the temperature increases towards the normal boiling point of the heat transfer liquid, the liquid may eventually be exchanged with a liquid with a higher normal boiling point in order to be able to increase the temperature of the storage further.

The heat reservoir consists of stones contained in an air tight metal container having dimensions of 12 m (length) x 2.35 m (width) x 2.6 m (height) and being insulated using ceramic stone wool on the outside. The stones have an average diameter of 150 mm and a size distribution (spread) of 50 mm. The shape of the stones are rounded, thus forming an interconnected network of air in between with an average width of 10-30 mm, measured as the largest distance from a point in the void to the nearest stone, allowing for relatively unhindered flow of heat transfer fluid. The bottom of the container is made slightly sloped, so a small area is defining the lowest point of the container, where a mechanical extraction mechanism is placed in the form of a pump. At the top of the container, spray nozzles are placed with a distance of 1 m in a 11 x 2 layout, each capable of delivering a liquid flow of 0.3 kg/s. With an average heat of evaporation of 300 kJ/kg for the heat transfer fluids, this corresponds to a maximum extraction rate of 2 MW. The filling ratio of the stones in the container is 75% giving a total specific heat capacity of 44.5 kWh/K. (specific heat of the used stone 0.84 kJ/(kg*K), density of the stone is 2600 kg/m³). For a fully charged container (300 °C) this corresponds to a usable energy content of approximately 10 MWh (when discharging to a stone temperature of 50 °C). The output system collect the hot evaporated heat transfer fluids through piping to the container. The evaporated heat transfer fluid is passed through a heat exchanger, where the heat is transferred to the working gas in an ORC generator, thus producing electricity. The condensed heat transfer fluid is then re-injected into the container. The fluid being used for the energy extraction can be the same as the fluid for the charging of the storage. When the temperature in the storage decreases during discharge, the heat transfer rate will gradually fall, and the temperature that can be achieved in the output system will also decrease. If the heat transfer rate falls below an operative threshold, a second heat transfer liquid with a lower normal boiling point can be injected, thus increasing the heat transfer rate, but not the maximum output temperature (which is limited by the storage temperature no matter the liquid used).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A heat storage reservoir (102) comprising:
at least one input inlet (128) for introduction of gaseous heat transfer fluid, or for introduction of superheated liquid heat transfer fluid, into the heat storage reservoir (102), and at least one liquid recovery system (116) for recovery of liquid heat transfer fluid from the heat storage reservoir (102); and/or
at least one gas outlet (118) for recovery of gaseous heat transfer fluid from the heat storage reservoir (102), and at least one output inlet (110) for introduction of liquid heat transfer fluid into the heat storage reservoir (102);
and further comprising a volume (106) of solid granular material (108), to which volume (106) heat is transferable by means of a phase change from gas to liquid of a heat transfer fluid on contact of the heat transfer fluid with the solid granular material (108), and/or from which volume (106) heat is transferable by means of a phase change from liquid to gas of a heat transfer fluid on contact of the heat transfer fluid with the solid granular material (108),
which volume (106) is in fluid connection with the at least one input inlet (128) and the at least one liquid recovery system (116), and/or the at least one gas outlet (118) and the at least one output inlet (110), and
a pressure reduction system (120) in fluid connection with the volume (106) of solid granular material (108), the pressure reduction system (120) is arranged to reduce the gas pressure contribution arising from non-condensable species only, **characterized in that**
the pressure reduction system (120) comprises a condenser (122) that is operable to condense gaseous heat transfer fluid and prevent its removal from the heat storage reservoir (102) by the pressure reduction system (120).

2. A heat storage reservoir (102) according to claim 1, wherein the condenser (122) is maintained at a suitable temperature to condense gaseous heat transfer fluid by exposure to the ambient environment.

3. A heat storage reservoir (102) according to claim 1 or claim 2, wherein the condenser (122) is arranged such that condensed heat transfer fluid is returned to the heat storage reservoir (102) by the operation of gravity.

4. A heat storage reservoir (102) according to any preceding claim, wherein:
the solid granular material (108) has a non-porous surface, preferably wherein the solid granular material (108) is capable of containing a volume of heat transfer fluid within the pores of the granule of less than 1% of the volume of the granule; and/or
the solid granular material (108) has a convex granule shape, preferably wherein the solid granular material (108) has a granule shape such that a volume of heat transfer fluid of less than 1% of the volume of the granule is able to occupy concave areas on the surface of the granule; and/or
the solid granular material (108) has a granule diameter of from 10 mm to 500 mm, preferably from 10 mm to 300 mm; and/or
the filling ratio of the solid granular material (108) within the volume (106) of solid granular material (108) ranges from 0.5 to 0.9; and/or
the solid granular material (108) is selected from rock granules, mineral granules and mixtures thereof, and more preferably is selected from granite, basalt, marble, diamond, quartz, flint, pebbles obtained from a beach, sea bed or river bed, or mixtures thereof.

5. A heat storage reservoir (102) according to any preceding claim, wherein the heat storage reservoir (102) is designed to be pressurized to at most 1 bar overpressure.

6. A heat storage system (100), comprising an input system (126) and/or an output system (132), and a heat storage reservoir (102), wherein the heat storage reservoir (102) is in accordance with any one of claims 1 to 5; and
wherein the input system (126) further comprises an input heat source (130) in fluid connection with the at least one input inlet (128) and the at least one recovery system (116), the input heat source (130) being arranged to evaporate liquid heat transfer fluid received from the at least one liquid recovery system (116) prior to introduction of the gaseous heat transfer fluid into the heat storage reservoir (102) through the at least one input inlet (128), or to generate a superheated liquid heat transfer fluid that is introducable into the heat storage reservoir (102) through the at least one input intlet (128) and evaporatable at least partially to form a gaseous heat transfer fluid, and/or
wherein the output system (132) further comprises an output heat sink (134) in fluid connection with the at least one output inlet (110) and the at least one gas outlet (118), the output heat sink (134) being arranged to condense gaseous heat transfer fluid received from the at least one gas outlet (118) prior to introduction of the liquid heat transfer fluid into the heat storage reservoir (102) through the at least one output inlet (110).

7. A heat storage system (100) according to claim 6, wherein the movement of the gaseous or superheated heat transfer fluid from the input heat source (130) to the heat storage reservoir (102), and/or the movement of the gaseous heat transfer fluid from the heat storage reservoir (102) to the output heat sink (134) is driven solely by the phase change in the heat transfer fluid on contact with the solid granular material (108).

8. A heat storage system (100) according to claim 6 or claim 7, wherein the movement of the liquid heat transfer fluid from the heat storage reservoir (102) to the input heat source (130), and/or the movement of the liquid heat transfer fluid from the output heat sink (134) to the heat storage reservoir (102), is driven solely by the operation of gravity.

9. A method of charging heat to and/or discharging heat from a heat storage reservoir (102) according to any one of claims 1 to 5
the method comprising:
reduction of the pressure within the volume (106) of solid granular material (108) before and/or during the introduction of heat transfer fluid through the at least one input inlet (128) and/or the at least one output inlet (118) into the heat storage reservoir (102) to contact the volume (106) of solid granular material (108),
wherein the pressure reduction is a reduction in the gas pressure contribution arising from non-condensable species only.

10. A method of charging heat to and/or discharging heat from a heat storage system (100) according to any of the claims 6-8,
the method comprising:
A. charging the heat storage reservoir (102) with heat by heating a liquid heat transfer fluid in the input system (126) by transfer of heat from the input heat source (130) such that the heat transfer fluid evaporates or is superheated; introduction of the evaporated or superheated heat transfer fluid into the volume (106) of solid granular material (108) through the input inlet (128) such that the evaporated heat transfer fluid condenses on contact with the solid granular material (108), or the superheated heat transfer fluid evaporates on or subsequent to entry to the volume (106) of solid granular material (108) and then condenses on contact with the solid granular material (108), thereby transferring heat from the heat transfer fluid to the solid granular material (108); and collection of the condensed liquid heat transfer fluid by the liquid recovery system (116); and/or
B. discharging heat from the heat storage reservoir (102) by introduction of a liquid heat transfer fluid through the output inlet (110) into the volume (106) of solid granular material (108) such that the liquid heat transfer fluid evaporates on contact with the solid granular material (108), thereby transferring heat from the solid granular material (108) to the liquid heat transfer fluid; and allowing the evaporated heat transfer fluid to pass through the gas outlet (118) to the output heat sink (134) and transfer heat to the output heat sink (134) causing the evaporated heat transfer fluid to condense;
wherein the pressure within the volume (106) of solid granular material (108) is reduced before and/or during the introduction of heat transfer fluid through the at least one input inlet (128) and/or the at least one output inlet (110) into the volume (106) of solid granular material (108)
**characterized in that** the pressure reduction is a reduction in the gas pressure contribution arising from non-condensable species only.

11. A method according to any one of claims 9 to 10, wherein the gas pressure contribution arising from non-condensable species only is 200 mbar or less, more preferably 175 mbar or less, or 150 mbar or less, such as 125 mbar or less, or 100 mbar or less, such as 75 mbar or less, or 50 mbar or less, such as 25 mbar or less, or 10 mbar or less, such as 5 mbar or less.

12. A method according to any one of claims 9 to 11, wherein the degree of pressure reduction is varied to vary the boiling point of the heat transfer fluid such that the boiling point of the heat transfer fluid increases during the charging of heat to the heat storage reservoir (102) and/or decreases during the discharging of heat from the heat storage reservoir (102).

13. A method according to any one of claims 9 to 12, wherein the fraction of heat transfer to and/or from said heat storage reservoir (102) that takes place through phase change of the heat transfer fluid is preferably at least 50%, more preferably 60%, more preferably 70%, even more preferably 80%, even more preferably 90% and most preferably more than 95%.

14. A method according to any one of claims 9 to 13, wherein the heat transfer fluid is stable to the operating temperature of the heat transfer reservoir (102) as a result of the reduction of the gas pressure contribution arising from non-condensable species.

## Patentansprüche

1. Ein Wärmespeichertank (102) umfassend:
Mindestens einen Eingangseinlass (128) für die Einleitung eines gasförmigen Wärmeübertragungsfluids oder für die Einleitung eines überhitzten flüssigen Wärmeübertragungsfluids in den Wärmespeichertank (102) und mindestens ein Flüssigkeitsrückgewinnungssystem (116) für die Rückgewinnung eines flüssigen Wärmeübertragungsfluids von dem Wärmespeichertank (102); und/oder
mindestens einen Gasauslass (118) für die Rückgewinnung des gasförmigen Wärmeübertragungsfluids von dem Wärmespeichertank (102), und mindestens einen Ausgangseinlass (110) für die Einleitung eines flüssigen Wärmeübertragungsfluids in den Wärmespeichertank (102);
und ferner umfassend ein Volumen (106) aus festem körnigem Material (108), auf dessen Volumen (106) Wärme über eine Phasenänderung von Gas zu Flüssigkeit eines Wärmeübertragungsfluids bei Kontakt des Wärmeübertragungsfluids mit dem festen körnigen Material (108) übertragen werden kann und/oder von dessen Volumen (106) Wärme über eine Phasenänderung von Flüssigkeit zu Gas eines Wärmeübertragungsfluids bei Kontakt des Wärmeübertragungsfluids
mit dem festen körnigen Material (108) übertragen werden kann,
dessen Volumen (106) in Fluidverbindung mit dem mindestens einen Eingangseinlass (128) und dem mindestens einen Flüssigkeitsrückgewinnungssystem (116) und/oder dem mindestens einen Gasauslass (118) und dem mindestens einen Ausgangseinlass (110) steht,
und ein Druckreduziersystem (120) in Fluidverbindung mit dem Volumen (106) aus festem körnigem Material (108),
das Druckreduziersystem (120) ist so angeordnet, dass es die Gasdruckzuführung reduziert, die sich nur aus nichtkondensierbaren Arten ergibt,
**dadurch gekennzeichnet, dass** das Druckreduziersystem (120) einen Kondensator (122) umfasst, der betriebsfähig ist, das gasförmige Wärmeübertragungsfluid zu kondensieren und sein Entweichen aus dem Wärmespeichertank (102) durch das Druckreduziersystem (120) zu verhindern.

2. Wärmespeichertank (102) nach Anspruch 1, wobei der Kondensator (122) bei einer geeigneten Temperatur gehalten wird, um gasförmiges Wärmeübertragungsfluid durch Kontakt mit der Umgebungsluft zu kondensieren.

3. Wärmespeichertank (102) nach Anspruch 1 oder Anspruch 2, wobei der Kondensator (122) so angeordnet ist, dass das kondensierte Wärmeübertragungsfluid über die Schwerkraft in den Wärmespeichertank (102) zurückgeleitet wird.

4. Wärmespeichertank (102) nach einem der vorstehenden Ansprüche, wobei das feste körnige Material (108) eine nichtporöse Oberfläche hat, vorzugsweise wobei das feste körnige Material (108) ein Volumen von Wärmeübertragungsfluid
innerhalb der Poren des Granulats von weniger als 1% des Volumens des Granulats enthalten kann; und/oder
das feste körnige Material (108) eine konvexe Granulatform hat, vorzugsweise wobei das feste körnige Material (108) eine Granulatform hat, so dass ein Volumen eines Wärmeübertragungsfluids von weniger als 1% des Volumens des Granulats in der Lage ist, konkave Bereiche der Oberfläche des Granulats einzunehmen; und/oder
das feste körnige Material (108) einen Granulatdurchmesser von 10 mm bis 500 mm hat, vorzugsweise von 10 mm bis 300 mm; und/oder
das Füllverhältnis des festen körnigen Materials (108) innerhalb des Volumens (106) des festen körnigen Materials (108) von 0,5 bis 0,9 reicht; und/oder
das feste körnige Material (108) ausgewählt ist aus Felsgranulat, Mineralgranulat und Mischungen daraus, und noch mehr vorzuziehen ausgewählt aus Granit, Basalt, Marmor, Diamant, Quarz, Feuerstein, Kieselsteinen von Stränden, Meeresböden oder Flussbetten oder Mischungen daraus.

5. Wärmespeichertank (102) nach einem der vorstehenden Ansprüche, wobei der Wärmespeichertank (102) ausgelegt ist, auf höchstens 1 bar Überdruck druckbeaufschlagt zu werden.

6. Wärmespeichersystem (100), umfassend ein Eingangssystem (126) und/oder ein Ausgangssystem (132) und einen Wärmespeichertank (102), wobei der Wärmespeichertank (102) mit einem der Ansprüche 1 bis 5 übereinstimmt; und
wobei das Eingangssystem (126) ferner eine Eingangswärmequelle (130) in Fluidverbindung mit dem mindestens einen Eingangseinlass (128) und dem mindestens einen Rückgewinnungssystem (116) umfasst, die Eingangswärmequelle (130) ist so angeordnet, dass sie flüssiges Wärmeübertragungsfluid verdampft, das sie von dem mindestens einen Flüssigkeitsrückgewinnungssystem (116) vor der Einleitung von gasförmigem Wärmeübertragungsfluid in den Wärmespeichertank (102) über den mindestens einen Eingangseinlass (128) empfangen hat, oder ein überhitztes flüssiges Wärmeübertragungsfluid erzeugt, das in den Wärmespeichertank (102) über den mindestens einen Eingangseinlass (128) einleitbar ist und mindestens teilweise verdampfbar ist, um ein gasförmiges Wärmeübertragungsfluid zu bilden, und/oder
wobei das Ausgangssystem (132) ferner einen Ausgangskühlkörper (134) in Fluidverbindung mit dem mindestens einen Ausgangseinlass (110) und dem mindestens einen Gasauslass (118) umfasst, der Ausgangskühlkörper (134) ist so angeordnet, dass er gasförmiges Wärmeübertragungsfluid kondensiert, das er von dem mindestens einen Gasauslass (118) vor der Einleitung des flüssigen Wärmeübertragungsfluids in den Wärmespeichertank (102) über den mindestens einen Ausgangseinlass (110) empfangen hat.

7. Wärmespeichersystem (100) nach Anspruch 6, wobei die Bewegung des gasförmigen oder überhitzten Wärmeübertragungsfluids von der Eingangswärmequelle (130) zu dem Wärmespeichertank (102) und/oder die Bewegung des gasförmigen Wärmeübertragungsfluids von dem Wärmespeichertank (102) zu dem Ausgangskühlkörper (134) nur durch die Phasenänderung in dem Wärmeübertragungsfluid bei Kontakt mit dem festen körnigen Material (108) angetrieben wird.

8. Wärmespeichersystem (100) nach Anspruch 6 oder Anspruch 7, wobei die Bewegung des flüssigen Wärmeübertragungsfluids von dem Wärmespeichertank (102) zu der Eingangswärmequelle (130), und/oder die Bewegung des flüssigen Wärmeübertragungsfluids von dem Ausgangskühlkörper (134) zu dem Wärmespeichertank (102) nur über die Schwerkraft angetrieben wird.

9. Verfahren zum Einleiten von Wärme in und/oder zum Ableiten von Wärme aus einem Wärmespeichertank (102) nach einem der Ansprüche 1 bis 5,
das Verfahren umfassend:
Druckreduzierung innerhalb des Volumens (106) aus festem körnigem Material (108) vor und/oder während der Einleitung des Wärmeübertragungsfluids durch den mindestens einen Eingangseinlass (128) und/oder den mindestens einen Ausgangseinlass (118) in den Wärmespeichertank (102), um Kontakt mit dem Volumen (106) aus festem körnigem Material (108) herzustellen, wobei die Druckreduzierung eine Reduzierung in der Gasdruckzuführung ist, die sich nur aus nichtkondensierbaren Arten ergibt.

10. Verfahren zum Einleiten von Wärme in und/oder zum Ableiten von Wärme aus einem Wärmespeichersystem (100) nach einem der Ansprüche 6 bis 8, das Verfahren umfassend:
A. Einleiten von Wärme in den Wärmespeichertank (102) durch Erwärmen eines flüssigen Wärmeübertragungsfluids in das Eingangssystem (126) durch Übertragen der Wärme von der Eingangswärmequelle (130), so dass das Wärmeübertragungsfluid verdampft oder überhitzt wird; Einleiten des verdampften oder überhitzten Wärmeübertragungsfluids in das Volumen (106) aus festem körnigem Material (108) durch den Eingangseinlass (128), so dass das verdampfte Wärmeübertragungsfluid bei Kontakt mit dem festen körnigen Material (108) kondensiert oder das überhitzte Wärmeübertragungsfluid an oder nach dem Eingang in das Volumen (106) des festen körnigen Materials (108) verdampft und dann bei Kontakt mit dem festen körnigen Material (108) kondensiert und dadurch die Wärme aus dem Wärmeübertragungsfluid an das feste körnige Material (108) überträgt; und Erfassen des kondensierten flüssigen Wärmeübertragungsfluids durch das Flüssigkeitsrückgewinnungssystem (116); und/oder
B. Ableiten der Wärme aus dem Wärmespeichertank (102) durch Einleiten eines flüssigen Wärmeübertragungsfluids durch den Ausgangseinlass (110) in das Volumen (106) aus festem körnigem Material (108), so dass das flüssige Wärmeübertragungsfluid bei Kontakt mit dem festen körnigen Material (108) verdampft, wodurch Wärme von dem festen körnigen Material (108) an das flüssige Wärmeübertragungsfluid übertragen wird; und Erlauben, dass das verdampfte Wärmeübertragungsfluid durch den Gasauslass (118) zu dem Ausgangskühlkörper (134) strömt und Wärme an den Ausgangskühlkörper (134) überträgt und veranlasst, dass das verdampfte Wärmeübertragungsfluid kondensiert;
wobei der Druck innerhalb des Volumens (106) aus festem körnigem Material (108), vor und/oder während des Einleitens des Wärmeübertragungsfluids durch den mindestens einen Eingangseinlass (128) und/oder den mindestens einen Ausgangseinlass (110) in das Volumen
(106) aus festem körnigem Material (108) reduziert wird, **gekennzeichnet dadurch, dass** die Druckreduzierung eine Reduzierung in der Gasdruckzuführung ist, die sich nur aus nichtkondensierbaren Arten ergibt.

11. Verfahren nach einem der Ansprüche 9 bis 10, wobei die
Gasdruckzuführung, die sich nur aus nichtkondensierbaren Arten ergibt, bei 200 mbar oder weniger, noch mehr vorzuziehen bei 175 mbar oder weniger oder bei 150 mbar oder weniger liegt, wie 125 mbar oder weniger, oder 100 mbar oder weniger, wie 75 mbar oder weniger oder 50 mbar oder weniger, wie 25 mbar oder
weniger oder 10 mbar oder weniger, wie 5 mbar oder weniger.

12. Verfahren nach einem der Ansprüche 9 bis 11, wobei der Grad der Druckreduzierung variiert wird, um den Siedepunkt des Wärmeübertragungsfluids zu variieren, so dass der Siedepunkt des Wärmeübertragungsfluids während des Einleitens der Wärme in den Wärmespeichertank (102) und/oder beim Ableiten der Wärme aus dem Wärmespeichertank (102) ansteigt oder sinkt.

13. Verfahren nach einem der Ansprüche 9 bis 12, wobei der Anteil der Wärmeübertragung an und/oder aus dem Wärmespeichertank (102), die über eine Phasenänderung des Wärmeübertragungsfluids stattfindet, vorzugsweise bei mindestens 50% liegt, noch mehr vorzuziehen bei 60%, noch mehr vorzuziehen bei 70% und noch mehr vorzuziehen bei 80%, noch mehr vorzuziehen bei 90% und am meisten vorzuziehen bei mehr als 95% liegt.

14. Verfahren nach einem der Ansprüche 9 bis 13, wobei das Wärmeübertragungsfluid, infolge der Reduzierung der Gasdruckzuführung, die sich aus nichtkondensierbaren Arten ergibt, stabil bei der Betriebstemperatur des Wärmespeichertanks (102) liegt.

## Revendications

1. Réservoir de stockage de chaleur (102) comprenant :
au moins une voie d'entrée (128) pour introduction de fluide gazeux de transfert de chaleur, ou pour introduction de fluide liquide de transfert de chaleur surchauffé, dans le réservoir de stockage de chaleur (102), et au moins un système de récupération (116) de liquide pour la récupération de fluide liquide de transfert de chaleur à partir du réservoir de stockage de chaleur (102) ; et/ou
au moins une sortie (118) de gaz pour récupération de fluide gazeux de transfert de chaleur à partir du réservoir de stockage de chaleur (102), et au moins une voie de sortie (110) pour introduction de fluide liquide de transfert de chaleur dans le réservoir de stockage de chaleur (102) ;
et comprenant en outre un volume (106) de matière solide granulaire (108), volume (106) auquel de la chaleur est transférable au moyen d'un changement de phase de gaz à liquide d'un fluide de transfert de chaleur au contact du fluide de transfert de chaleur avec la matière solide granulaire (108), et/ou volume (106) duquel de la chaleur est transférable au moyen d'un changement de phase de liquide à gaz d'un fluide de transfert de chaleur au contact du fluide de transfert de chaleur avec la matière solide granulaire (108),
lequel volume (106) est en communication fluidique avec ladite au moins une voie d'entrée (128) et ledit au moins un système de récupération (116) de liquide, et/ou ladite au moins une sortie (118) de gaz et ladite au moins une voie de sortie (110), et
un système de réduction de pression (120) en communication fluidique avec le volume (106) de matière solide granulaire (108),
le système de réduction de pression (120) est disposé pour réduire la contribution de pression de gaz due uniquement à des espèces non condensables,
**caractérisé en ce que** le système de réduction de pression (120) comprend un condenseur (122) qui est utilisable pour condenser du fluide gazeux de transfert de chaleur et empêcher son extraction du réservoir de stockage de chaleur (120) par le système de réduction de pression (120).

2. Réservoir de stockage de chaleur (102) selon la revendication 1, dans lequel le condenseur (122) est maintenu à une température convenable pour condenser du fluide gazeux de transfert de chaleur par exposition à l'environnement ambiant.

3. Réservoir de stockage de chaleur (102) selon la revendication 1 ou la revendication 2, dans lequel le condenseur (122) est disposé de telle façon que du fluide de transfert de chaleur condensé est renvoyé au réservoir de stockage de chaleur (102) par l'effet de la pesanteur.

4. Réservoir de stockage de chaleur (102) selon l'une quelconque des revendications précédentes, dans lequel :
la matière solide granulaire (108) présente une surface non poreuse, de préférence dans lequel la matière solide granulaire (108) est capable de contenir à l'intérieur des pores du granule un volume de fluide de transfert de chaleur qui représente moins de 1 % du volume du granule ; et/ou
la matière solide granulaire (108) a une forme convexe de granule, de préférence dans lequel la matière solide granulaire (108) a une forme de granule telle qu'un volume de fluide de transfert de chaleur représentant moins de 1 % du volume du granule est apte à occuper des zones concaves sur la surface du granule ; et/ou
la matière solide granulaire (108) a un diamètre de granule de 10 mm à 500 mm, de préférence de 10 mm à 300 mm ; et/ou
le taux de remplissage de la matière solide granulaire (108) à l'intérieur du volume (106) de matière solide granulaire (108) se situe dans la plage de 0,5 à 0,9 ; et/ou
la matière solide granulaire (108) est choisie parmi des granules de roche, des granules minéraux et des mélanges de ceux-ci, et plus préférablement est choisie parmi le granite, le basalte, le marbre, le diamant, le quartz, le silex, des galets obtenus à partir d'une plage, d'un fond marin ou d'un lit de rivière, ou des mélanges de ceux-ci.

5. Réservoir de stockage de chaleur (102) selon l'une quelconque des revendications précédentes, dans lequel le réservoir de stockage de chaleur (102) est conçu pour être mis sous une surpression de 1 bar au maximum.

6. Système de stockage de chaleur (100), comprenant un système d'entrée (126) et/ou un système de sortie (132) et un réservoir de stockage de chaleur (102), dans lequel le réservoir de stockage de chaleur (102) est en conformité avec l'une quelconque des revendications 1 à 5 ; et
dans lequel le système d'entrée (126) comprend en outre un source de chaleur d'entrée (130) en communication fluidique avec ladite au moins une voie d'entrée (128) et ledit au moins un système de récupération (116), la source de chaleur d'entrée (130) étant disposée pour évaporer du fluide liquide de transfert de chaleur reçu depuis ledit au moins un système de récupération (116) de liquide avant l'introduction du fluide gazeux de transfert de chaleur dans le réservoir de stockage de chaleur (102) via ladite au moins une voie d'entrée (128), ou pour engendrer un fluide liquide de transfert de chaleur surchauffé qui peut être introduit dans le réservoir de stockage de chaleur (102) via ladite au moins une voie d'entrée (128) et peut être au moins partiellement évaporé pour former un fluide gazeux de transfert de chaleur, et/ou
dans lequel le système de sortie (132) comprend en outre un puits de chaleur (134) de sortie en communication fluidique avec ladite au moins une voie d'entrée (110) et ladite au moins une sortie de gaz (118), le puits de chaleur (134) de sortie étant disposé pour condenser du fluide gazeux de transfert de chaleur reçu depuis ladite au moins une sortie de gaz (118) avant l'introduction du fluide liquide de transfert de chaleur dans le réservoir de stockage de chaleur (102) via ladite au moins une voie de sortie (110).

7. Système de stockage de chaleur (100) selon la revendication 6, dans lequel le déplacement du fluide de transfert de chaleur gazeux ou surchauffé depuis la source de chaleur d'entrée (130) vers le réservoir de stockage de chaleur (102), et/ou le déplacement du fluide gazeux de transfert de chaleur depuis le réservoir de stockage de chaleur (102) vers le puits de chaleur (134) de sortie est uniquement causé par le changement de phase dans le fluide de transfert de chaleur au contact avec la matière solide granulaire (108).

8. Système de stockage de chaleur (100) selon la revendication 6 ou la revendication 7, dans lequel le déplacement du fluide liquide de transfert de chaleur depuis le réservoir de stockage de chaleur (102) vers la source de chaleur d'entrée (130), et/ou le déplacement du fluide liquide de transfert de chaleur depuis le puits de chaleur (134) de sortie vers le réservoir de stockage de chaleur (102) est uniquement causé par l'effet de la pesanteur.

9. Procédé de chargement de chaleur dans et/ou de déchargement de chaleur depuis un réservoir de stockage de chaleur (102) selon l'une quelconque des revendications 1 à 5, le procédé comprenant :
la réduction de la pression à l'intérieur du volume (106) de matière solide granulaire (108) avant et/ou pendant l'introduction de fluide de transfert de chaleur via ladite au moins une voie d'entrée (128) et/ou ladite au moins une voie de sortie (118) dans le réservoir de stockage de chaleur (102) pour entrer en contact avec le volume (106) de matière solide granulaire (108), la réduction de la pression étant une réduction de la contribution de pression de gaz due uniquement à des espèces non condensables.

10. Procédé de chargement de chaleur dans et/ou de déchargement de chaleur depuis un système de stockage de chaleur (100) selon l'une quelconque des revendications 6-8,
le procédé comprenant :
A. le chargement du réservoir de stockage de chaleur (102) avec de la chaleur par chauffage d'un fluide liquide de transfert de chaleur dans le système d'entrée (126) par transfert de chaleur depuis la source de chaleur d'entrée (130) de sorte que le fluide de transfert de chaleur s'évapore ou est surchauffé ; l'introduction dans le volume (106) de matière solide granulaire (108) du fluide de transfert de chaleur évaporé ou surchauffé, via la voie d'entrée (128), de sorte que le fluide de transfert de chaleur évaporé se condense au contact avec la matière solide granulaire (108), ou le fluide de transfert de chaleur surchauffé s'évapore lors ou à la suite de l'entrée dans le volume (106) de matière solide granulaire (108) et se condense alors au contact avec la matière solide granulaire (108), en transférant ainsi de la chaleur du fluide de transfert de chaleur à la matière solide granulaire (108) ; et la collecte par le système de récupération (116) de liquide du fluide liquide de transfert de chaleur condensé ; et/ou
B. le déchargement de chaleur depuis le réservoir de stockage de chaleur (102) par introduction d'un fluide liquide de transfert de chaleur via la voie de sortie (110) dans le volume (106) de matière solide granulaire (108) de sorte que le fluide liquide de transfert de chaleur s'évapore au contact avec la matière solide granulaire (108), en transférant ainsi de la chaleur de la matière solide granulaire (108) au fluide liquide de transfert de chaleur ; et en permettant au fluide de transfert de chaleur évaporé de passer dans le puits de chaleur (134) de sortie via la sortie (118) de gaz et de transférer de la chaleur au puits de chaleur (134) de sortie en provoquant la condensation du fluide de transfert de chaleur évaporé ;
la pression à l'intérieur du volume (106) de matière solide granulaire (108) étant réduite avant et/ou pendant l'introduction du fluide de transfert de chaleur dans le volume (106) de matière solide granulaire (108) via ladite au moins une voie d'entrée (128) et/ou ladite au moins une voie de sortie (110),
**caractérisé en ce que** la réduction de la pression est une réduction de la contribution de pression de gaz due uniquement à des espèces non condensables.

11. Procédé selon l'une quelconque des revendications 9 et 10, dans lequel la contribution de pression de gaz due uniquement à des espèces non condensables est de 200 mbars ou moins, plus préférablement de 175 mbars ou moins, ou de 150 mbars ou moins, telle que de 125 mbars ou moins, ou de 100 mbars ou moins, telle que de 75 mbars ou moins, ou de 50 mbars ou moins, telle que de 25 mbars ou moins, ou de 10 mbars ou moins, telle que de 5 mbars ou moins.

12. Procédé selon l'une quelconque des revendications 9 à 11, dans lequel le degré de réduction de pression est modifié afin de modifier le point d'ébullition du fluide de transfert de chaleur de manière que le point d'ébullition du fluide de transfert de chaleur s'élève au cours du chargement de chaleur dans le réservoir de stockage de chaleur (102) et/ou s'abaisse au cours du déchargement de chaleur depuis le réservoir de stockage de chaleur (102).

13. Procédé selon l'une quelconque des revendications 9 à 12, dans lequel la fraction de transfert de chaleur dans et/ou depuis ledit réservoir de stockage de chaleur (102) qui a lieu via le changement de phase du fluide de transfert de chaleur est de préférence d'au moins 50 %, plus préférablement 60 %, plus préférablement 70 %, encore plus préférablement 80 %, encore plus préférablement 90 %, et le plus préférablement de plus de 95 %.

14. Procédé selon l'une quelconque des revendications 9 à 13, dans lequel le fluide de transfert de chaleur est stable à la température de fonctionnement du réservoir de transfert de chaleur (102) en raison de la réduction de la contribution de pression de gaz due à espèces non condensables.
